# NEUE EUROPÄISCHE PATENTSCHRIFT

(11) **EP 0 894 304 B2**
(45) Veröffentlichungstag und Bekanntmachung des Hinweises auf die Entscheidung über den Einspruch: **26.03.2008**
(45) Hinweis auf die Patenterteilung: 04.09.2002
(21) Anmeldenummer: 97920731.3
(22) Anmeldetag: 18.04.1997
(51) Int. Cl.: G06F 11/26, G06F 17/50

(54) **VERFAHREN ZUR AUTOMATISCHEN DIAGNOSE TECHNISCHER SYSTEME UNTER BERÜCKSICHTIGUNG EINES EFFIZIENTEN WISSENSERWERBS UND EINER EFFIZIENTEN BEARBEITUNG ZUR LAUFZEIT**
PROCESS FOR AUTOMATIC DIAGNOSIS OF TECHNICAL SYSTEMS TAKING INTO CONSIDERATION EFFICIENT KNOWLEDGE ACQUISITION AND EFFICIENT PROCESSING IN RELATION TO OPERATIONAL TIME
PROCEDE DE DIAGNOSTIC AUTOMATIQUE DE SYSTEMES TECHNIQUES PRENANT EN CONSIDERATION UNE ACQUISITION DE CONNAISSANCES EFFICACE ET UN TRAITEMENT EFFICACE CONCERNANT UN TEMPS DE FONCTIONNEMENT

(30) Priorität: 19.04.1996 DE 19617109
(43) Veröffentlichungstag der Anmeldung: 03.02.1999
(60) Teilanmeldung: 00250123.7
(73) Patentinhaber: Daimler AG, 70327 Stuttgart (DE)
(72) Erfinder: IWANOWSKI, Sebastian, D-16548 Glienicke (DE); JOHN, Ute, D-14167 Berlin (DE); MAY, Volker, D-12163 Berlin (DE); TATAR, Mugur, D-12169 Berlin (DE)
(86) Internationale Anmeldenummer: PCT/EP1997/002008
(87) Internationale Veröffentlichungsnummer: WO 1997/040445

(56) Entgegenhaltungen:
- COMPUTERS & CHEMICAL ENGINEERING, AUG. 1991, UK, Bd. 15, Nr. 8, ISSN 0098-1354, Seiten 583-599, XP002038760 CATINO C A ET AL: "Automatic generation of qualitative models of chemical process units"
- JIAH-SHING CHEN ET AL: "ACTION SELECTION IN INTERACTIVE MODEL-BASED DIAGNOSIS" 2.März 1992 , PROCEEDINGS OF THE CONFERENCE ON ARTIFICIAL INTELLIGENCE APPLICATIO, MONTEREY, MAR. 2 - 6, 1992, NR. CONF. 8, PAGE(S) 67 - 73 , INSTITUTE OF ELECTRICAL AND ELECTRONICS ENGINEERS XP000326504 siehe Seite 67, linke Spalte, Zeile 1 - Seite 68, linke Spalte, Zeile 18 siehe Seite 70, rechte Spalte, Zeile 1 - Seite 71, rechte Spalte, Zeile 5
- BERINGER H ET AL: "DIAGNOSING SYSTEMS MODELED WITH PIECEWISE LINEAR CONSTRAINTS" 6.November 1990 , PROCEEDINGS OF THE INTERNATIONAL CONFERENCE ON TOOLS FOR ARTIFICIAL INTELLIGENCE, HERNDON, NOV. 6 - 9, 1990, NR. CONF. 2, PAGE(S) 308 - 313 , INSTITUTE OF ELECTRICAL AND ELECTRONICS ENGINEERS XP000236177 siehe das ganze Dokument
- offenkundig vorbenutztes "ROSE-System" und zugehöriges Handbuch "Das modellbasierte Diagnose- und Simulationssystem ROSE 1.0", Stand August 1993, auszugsweise beigefügt sind Deckblätter, Inhaltsverzeichnis, Seiten 1-4, 34-37, 57-59, 64, 91, 92, 131-140, 155-157
- Sun, Ying/Weld, Daniel: A Framework for Model-Based Repair, Proceedings of the 11th National Conference on Artificial Intelligence (AAAI'93), pp. 182-187, USA 1993

## Beschreibung

Die Erfindung bezieht sich auf ein Verfahren zur automatischen Diagnose technischer Systeme unter Berücksichtigung eines effizienten Wissenserwerb von Maßnahmen, einer effiziente Berechnung zeitabhängiger Daten sowie einer Anbindung an Datenstrukturen, die eine besonders effiziente on-board-Diagnose ermöglichen.

Unter dem Arbeitsgebiet *Diagnose* wird im folgenden die Erstellung von Software zur Diagnose technischer Systeme verstanden. Die Diagnose hat als Aufgabe, in einem vorliegenden Exemplar eines technischen Systems aufgrund von bekannten Meßwerten mögliche Komponentenfehler zu lokalisieren.

Die Grundlage der *modellbasierten* Diagnosetechnik ist die Verwendung tiefen Wissens, d.h. der physikalischen Gesetze, auf denen sich das Systemverhalten begründet. Die modellbasierte Diagnosetechnik wird sowohl in regelungstechnischen Ansätzen verwendet als auch in wissensbasierten Ansätzen.

Die regelungstechnischen Ansätze sind die älteren modellbasierten Diagnoseverfahren. Sie erstellen für ein bestimmtes technisches System ein für die Diagnose bestmöglich geeignetes Simulationsmodell und erreichen auf diese Weise eine hervorragende Qualität der Resultate. Ihr Nachteil besteht darin, daß jede Lösung mit großem Aufwand speziell für ein System zugeschnitten ist und kaum für andere Systeme wiederverwendet werden kann. Daher sind sie oft unwirtschaftlich und werden nur für besonders teure oder besonders einzigartige Systeme angewendet wie z.B. Flugzeugsysteme oder Kraftwerke (siehe z.B. <BENES, Vitezlav: Automaticka diagnostika poruch energetickych zarizeni cislicovym pocitacem. Energetika 30 (1), pp. 21-24, 1980>).

Wissensbasierte Verfahren haben dagegen den Anspruch, für viele verschiedene Varianten von technischen Systemen wiederverwendbar zu sein, indem sie die Software in einen allgemeingültigen Problemlösungsteil und in einen anwendungsspezifischen Wissensteil unterteilen. Zunächst wurden unter den wissensbasierten Verfahren nur regel- und symptombasierte Diagnoseverfahren eingesetzt, welche immer noch einen erheblichen Aufwand für den Wissenserwerb, d.h. den Zuschnitt auf eine spezifische Anwendung erfordern. Aus diesem Grund wurde die wissensbasiert modellbasierte Diagnosetechnik entwickelt (siehe <DAVIS, Randall: Diagnostic Reasoning Based on Structure and Behavior. Artificial Intelligence 24 (1), pp. 347-410, 1984, auch in: HAMSCHER, Walter / CONSOLE, Luca, / DE KLEER, Johan (Editors): Readings in Model-Based Diagnosis, Morgan Kaufmann Publishers, San Mateo (CA, USA) 1992, pp. 376-407>). Im folgenden wird unter dem Begriff *modellbasiert* immer vorausgesetzt, daß es sich um eine wissensbasierte Technik handelt, d.h. regelungstechnische Ansätze werden nicht betrachtet.

Die modellbasierte Diagnose setzt voraus, daß ein System aus verschiedenen Komponenten aufgebaut ist, deren physikalischen Gesetze man lokal beschreiben kann, d.h. die Belegung bestimmter Parameter mit Werten hängt nur von der Belegung von im Systemmodell benachbarten Parametern ab. Das Gesamtnetzwerk der Beziehungen wird dadurch hergestellt, daß Komponenten über sogenannte Ports miteinander verbunden sind. Die Parameter der Ports benachbarter Komponenten werden beim Modellaufbau für das System identifiziert. Auf diese Weise kann man auch komplexe technische Systeme leicht modellieren, indem man in einem CAD-System ihre Komponentenstruktur modelliert, jeder Komponente einen Typ zuweist und jeden Typ einmalig physikalisch beschreibt. Diese Technik ist insbesondere dann vorteilhaft, wenn die zu beschreibenden Komponenten einfacher Natur sind (z.B. elektrische oder hydraulische Komponenten) und in großer Stückzahl in technischen Systemen vorkommen. Ein technisches System, das aus solchen Komponenten zusammengesetzt ist, kann eine beliebig komplexe Vernetzung aufweisen. Die modellbasierte Diagnose setzt die Gesetze des Gesamtsystems aus den Gesetzen der Einzelkomponenten und der Kenntnis der Verbindungsstruktur automatisch zusammen. Die Gesetze der Einzelkomponenten sind in unterschiedlicher Granularität modelliert, je nachdem, welche Fehler man unterscheiden möchte (siehe <STRUSS, Peter: What's in SD? Towards a Theory of Modeling for Diagnosis. Working Notes of the 2nd International Workshop on Principles of Diagnosis, Technical Report RT/DI/91-10-7, pp. 41-51, Torino (Italy) 1991>, auch in <HAMSCHER, Walter / CONSOLE, Luca, / DE KLEER, Johan (Editors): Readings in Model-Based Diagnosis, Morgan Kaufmann Publishers, San Mateo (CA, USA) 1992, pp. 419-449>). Hierbei wird nicht nur das Normalverhalten modelliert, sondern auch wohldefinierte Fehlverhalten, weil es aufgrund physikalischer Gesetze nicht beliebige Zusammenhänge zwischen den Modellparametern geben kann. Die physikalischen Gesetze sind als Relationen (Constraints) zwischen den Modellparametern definiert. Diese Constraints können sowohl allgemeingültig sein, als auch bestimmten Verhaltensmodi (Normal- und definierte Fehlfunktionen) von bestimmten Komponenten zugeordnet sein, was bedeutet, daß sie nur gelten, wenn die jeweilige Komponente den jeweiligen Verhaltensmodus eingenommen hat. Aufgrund der Kenntnis von bestimmten Werten von Modellparametern kann nun die Gültigkeit bestimmter Constraints ausgeschlossen werden, was wiederum den Ausschluß von bestimmten Verhaltensmodi für bestimmte Komponenten nach sich zieht. Als *Diagnose* wird eine konsistente Zuordnung von Verhaltensmodi an die Komponenten des technischen Systems bezeichnet derart, daß jede Komponente genau einen Verhaltensmodus hat und jeder bekannte Parameterwert mit dieser Zuordnung innerhalb des definierten Constraintsystems konsistent ist. Jede Diagnose spezifiziert also genau, welche Komponente defekt (möglicherweise mit Beschreibung der Art des Fehlers) und welche Komponente intakt (möglicherweise mit Beschreibung eines Zustands) ist.

Diagnosen können unterschiedlich ausgegeben werden. Eine übliche Ausgabe ist es, nur die als defekt erklärten Komponenten auszugeben und die implizite Vereinbarung zu treffen, daß die Diagnose alle nicht explizit erwähnten Komponenten als intakt erklärt. In den marktverfügbaren modellbasierten Diagnosesystemen ist es häufig nur möglich, Einfachfehler zu diagnostizieren. Häufig kann auch nur zwischen definiertem Normalverhalten und unbekannten Fehlverhalten unterschieden werden (konsistenzbasierter Ansatz). Stand der Technik - zumindestens in der Literatur - ist aber auch die Diagnose von Mehrfachfehlern und die Möglichkeit, definiertes Fehlverhalten zu berücksichtigen (abduktiver Ansatz).

Von der Aufgabenstellung her kann eine modellbasierte Diagnoseeinrichtung in ihrem Problemlösungsteil einen beliebigen Constraintlöser verwenden. Praktisch alle in der wissenschaftlichen Gemeinschaft vorgestellten Verfahren verwenden aber einen Constraintlöser, der mit einer *Inferenzmaschine* arbeitet: Eine Inferenzmaschine schließt (sie "inferiert") wiederholt aus bereits berechneten oder auch gemessenen Werten von Parametern und der Kenntnis der Constraints des technischen Systems auf neue Werte von Parametern. Die verschiedenen modellbasierten Diagnoseverfahren unterscheiden sich darin, welche Schlüsse überhaupt durchgeführt werden (z.B. nur Vorwärtssimulation von den bekannten Eingaben oder nur Rückwärtssimulation von den bekannten Ausgaben oder eine Mischung davon, usw.), in welcher Reihenfolge diese Schlüsse durchgeführt werden (d.h. die Steuerung der Inferenzmaschine) und in welchem Maße Berechnungen wiederverwendet werden. Außerdem kann nicht jedes Verfahren alle Aufgabenstellungen berechnen, die modellbasierten Diagnoseeinrichtungen prinzipiell bearbeiten können.

Als modernster modellbasierter Diagnoseansatz gilt die GDE (General Diagnostic Engine) und ihre Erweiterungen, da sich mit ihr der Stand der Technik in allen Belangen realisieren läßt. Der GDE-Ansatz benutzt für eine besonders effiziente Wiederverwendung bereits durchgeführter Berechnungen ein sogenanntes RMS (Reason Maintenance System), das in einer Interaktion zu der Inferenzmaschine steht. Verschiedene Verfahren nach dem GDE-Ansatz unterscheiden sich in der Schnittstelle zwischen Inferenzmaschine und RMS sowie in der Steuerung dieser Module. Auf den GDE-Ansatz wird später noch näher eingegangen.

Das Verfahren nach der Erfindung setzt voraus, daß die technische Beschreibung des zu diagnostizierenden Systems sich während eines Diagnosevorgangs nicht ändert, d.h. eine Grundmenge von gegebenen Constraints, nämlich die, die die generische Systembeschreibung ausmachen, ist invariant. Damit ist die Menge der eingangs möglichen Diagnosen eindeutig festgelegt. Diese Menge besteht in der Regel aus allen möglichen Kombinationen, den Komponenten Verhaltensmodi zuzuweisen, oder zumindestens einem großen Teil all dieser Kombinationen. Ziel des Diagnosevorgangs ist es, die Anzahl der für das zu diagnostizierende Exemplar möglichen Diagnosen durch weitere exemplarabhängige Informationen einzuschränken. Die wichtigste Art von Einschränkung ist die Belegung von Parametern mit bestimmten Werten (sei es durch Messungen/Beobachtungen oder durch Hypothesen). Je mehr Werte festgelegt sind, desto größer die Einschränkung und damit desto kleiner die Menge der noch möglichen Diagnosen.

Das Verfahren nach der Erfindung zielt auf technische Systeme ab, in denen nicht beliebige Paramelerwerte direkt bestimmt werden können. Der Einfachheit halber wird im folgenden die Bestimmung eines Parameters als Messung bezeichnet. Die Überlegungen gelten aber auch für Beobachtungen ohne Meßinstrumente und hypothetische Belegungen von Parametern mit Werten. Jede Messung gilt als kostspielig (mit unterschiedlichen Kosten). Ziel ist es, die Kosten für zusätzliche Messungen zu minimieren und gleichzeitig den Informationsgewinn zu maximieren.

Jedes modellbasierte Verfahren rechnet zu einer vorgegebenen Menge von gemessenen Werten die Menge der noch gültigen Diagnosen aus. Weil das immer noch sehr viele Diagnosen sein können, beschränkt sich das Interesse des Benutzers der Diagnoseeinrichtung in der Praxis meistens auf eine sehr kleine Teilmenge der noch gültigen Diagnosen (z.B. die besten fünf). Strategien, wie man die Teilmenge der interessanten Diagnose systematisch klein hält, sind in der Literatur vielfach beschrieben. Solange die Menge der interessanten Diagnosen noch mehrere Elemente enthält, ist es eine wichtige Fragestellung, durch welche zusätzlichen Werte diese Diagnosen unterschieden werden können.
Um dieses automatisch entscheiden zu können, wird als Problemstellung in modellbasierten Diagnoseeinrichtungen vom Stand der Technik ein *Systematischer Beobachtungsvorschlag* betrachtet:
*Voraussetzung:* Gegeben die Menge von noch möglichen Diagnosen 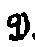 . Gegeben femer eine Wahrscheinlichkeitsverteilung auf dieser Menge. Außerdem sei eine Teilmenge 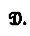 von 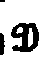 gegeben, der sogenannte Diagnose*focus*, d.h. die im Moment als interessant befundenen Diagnosen (Anm.: Im Extremfall kann 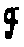 aus nur zwei Diagnosen bestehen, andererseits aber auch aus ganz 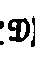 ). Die Anwendung der informationstheoretischen Entropiefunktion H auf 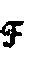 ist ein Maß über die Unsicherheit über die Ereignisse, welche der Diagnosen aus 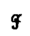 die richtige ist, bzw. des Ereignisses, daß keine der Diagnosen aus 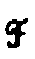 die richtige ist. H( 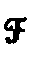 ,p,x) sei das Maß für die Unsicherheit über die oben genannten Ereignisse, wenn zusätzlich zu den bisher verwendeten Constraints der Modellparameter p den Wert x hat. H̅( 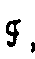 ,p) sei das erwartete Maß für die Unsicherheit über die oben genannten Ereignisse, wenn zusätzlich zu den bisher verwendeten Constraints der Modellparameter p irgendeinen Wert x hat (Anm.: Hierbei seien die möglichen Werte für x beliebig verteilt. Üblich ist es aber, die Gleichverteilung anzunehmen).
*Eingabe:* Gegeben die Teilmenge 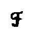 von 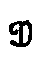 , eine Wahrscheinlichkeitsverteilung auf 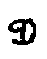 und Verteilungen der Parameterwerte für jeden Parameter p.
*Ausgabe:* Finde den Modellparameter p derart, daß die erwartete Entropie H̅( 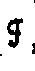 ,p) minimal ist.

Der systematische Beobachtungsvorschlag kann folgenderweise in eine modellbasierte Diagnoseeinrichtung integriert werden:
- Schritt 1:: Berechnung der besten (bzgl. der Wahrscheinlichkeitsverteilung) Diagnosen 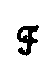 , die mit dem bisher bekanntem Wissen (generische Constraints plus bisher durchgeführte Messungen) über das zu diagnostizierende Exemplar konsistent sind. Wenn 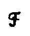 sicher genug ist, Ausgabe von 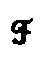 als Lösung. Anderenfalls weiter mit Schritt 2.
- Schritt 2:: Berechnung des systematischen Beobachtungsvorschlags für 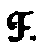 Das Ergebnis sei der Modellparameter p.
- Schritt 3:: Gewinnung des realen Wertes für p im zu diagnostizierenden Exemplar. Weiter mit Schritt 1.

Die Idee dieses systematischen Beobachtungsvorschlags und auch die erste veröffentlichte Lösung stammen von Johan de Kleer und Brian Williams (siehe <DE KLEER, Johan / WILLIAMS, Brian: Diagnosing Multiple Faults. Artificial Intelligence 32 (1), pp. 97-130, 1987, auch in: HAMSCHER, Walter / CONSOLE, Luca, / DE KLEER, Johan (Editors): Readings in Model-Based Diagnosis, Morgan Kaufmann Publishers, San Mateo (CA, USA) 1992, pp. 100-117>). Da die genaue Berechnung der de-posteriori-Wahrscheinlichkeiten und damit der Entropien nach Eingabe eines zusätzlich bekannten Wertes sehr rechenaufwendig ist, schlugen die Autoren vor, die de-posteriori-Wahrscheinlichkeiten von weiterhin gültigen Diagnosen durch die a-priori-Wahrscheinlichkeiten zu ersetzen und die de-posteriori-Wahrscheinlichkeiten von vor der Messung gültigen, aber nach der Messung nicht mehr gültigen Diagnosen durch Null zu ersetzen. de Kleer und Williams schlugen noch weitere Vereinfachungen vor, die inzwischen als Stand der Technik gelten.
Die bisher bekannten Diagnoseeinrichtungen, die einen systematischen Beobachtungsvorschlag verwenden, gehen nach dem zuvor beschriebenen Schema vor.

Peter Struss hat in <STRUSS, Peter: Testing for Discrimination of Diagnosis. Working Notes of the 5th International Workshop on Principles of Diagnosis, pp. 312-320, New Paltz (NY, USA) 1994> darauf hingewiesen, daß Parameter in der Regel unter unterschiedlichen Voraussetzungen, d.h. unterschiedlichen Werten an anderen Parametern, unterschiedliche Werte annehmen können. Er formulierte daher eine Verallgemeinerung des systematischen Beobachtungsvorschlags, nämlich den *systematischen Testvorschlag,* der folgendermaßen wiedergegeben werden kann:
*Voraussetzung:* Gegeben eine Menge von Diagnosen 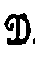 Gegeben ferner eine Wahrscheinlichkeitsverteilung auf dieser Menge. Außerdem sei eine Teilmenge 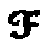 von 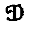 gegeben, der sogenannte Diagnose*focus*, d.h. die im Moment als interessant befundenen Diagnosen. Die Anwendung der informationstheoretischen Entropiefunktion H auf eine beliebige Teilmenge 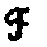 von 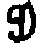 ist ein Maß über die Unsicherheit über die Ereignisse, welche der Diagnosen aus 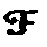 die richtige ist, bzw. des Ereignisses, daß keine der Diagnosen aus 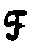 die richtige ist. Eine *Situation* S sei die Belegung aller frei wählbaren Einstellparameter (bei Struss: *causal variables)* mit Werten. H( 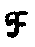 ,S,p,x) sei das Maß für die Unsicherheit über die oben genannten Ereignisse, wenn zusätzlich zu den bisher verwendeten Constraints der Modellparameter p in Situation S den Wert x hat. H̅( 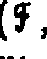 ,S,p) sei das erwartete Maß für die Unsicherheit über die oben genannten Ereignisse, wenn zusätzlich zu den bisher verwendeten Constraints der Modellparameter p in Situation S irgendeinen Wert x hat.
*Eingabe:* Gegeben eine Teilmenge 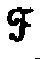 von 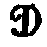 , eine Wahrscheinlichkeitsverteilung auf 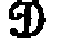 und Verteilungen der Parameterwerte für jeden Parameter p und verschiedene Situationen S.
*Ausgabe:* Finde die Situation S und den Modellparameter p derart, daß die erwartete Entropie H̅( 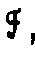 ,S,p) minimal ist.

Der systematische Testvorschlag kann folgenderweise in eine modellbasierte Diagnoseeinrichtung integriert werden:
- Schritt 1:: Berechnung der besten (bzgl. der Wahrscheinlichkeitsverteilung) Diagnosen 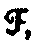 , die mit dem bisher bekanntem Wissen (generische Constraints plus bisher durchgeführte Messungen) über das zu diagnostizierende Exemplar konsistent sind. Wenn 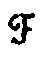 sicher genug ist, Ausgabe von 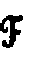 als Lösung. Anderenfalls weiter mit Schritt 2.
- Schritt 2:: Berechnung des systematischen Testvorschlags für 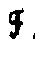 . . Das Ergebnis sei der Modellparameter p und die Situation S.
- Schritt 3:: Gewinnung des realen Wertes für p in Situation S im zu diagnostizierenden Exemplar. Weiter mit Schritt 1.

Struss gab in <STRUSS, Peter: Testing for Discrimination of Diagnosis. Working Notes of the 5th International Workshop on Principles of Diagnosis, pp. 312-320, New Paltz (NY, USA) 1994> ein grobes Konzept an, wie man das Problem Systematischer Testvorschlag löst. Das wesentliche Prinzip seines Lösungsvorschlags besteht darin, zu einem Parameter p die besten Voraussetzungen zu berechnen, um zwischen einer gegebenen Diagnosemenge unterscheiden zu können. Wenn diese Voraussetzungen Werte für Parameter sind, die selbst auch keine Einstellparameter sind, werden auch ihre Voraussetzungen berechnet, u.s.w.

Die bisher vorgestellten Techniken berücksichtigen noch nicht die tatsächliche Abfolge eines Reparaturprozesses: In der Regel hat man ein technisches System in einer bestimmten Situation und kann nun geeignete Maßnahmen daran vornehmen, um das System in einen gewünschten Zustand zu bringen. Diese Maßnahmen verursachen Kosten. Ziel ist es, die Kosten minimal zu halten.

Eine systematische Möglichkeit, den Reparaturvorgang zu modellieren, besteht darin, Konstrukte für Maßnahmen zu definieren, sie mit Kosten zu versehen und sie im Diagnosealgorithmus zu berücksichtigen. Dieses ist in <SUN, Ying, / WELD, Daniel: A Framework for Model-Based Repair. Proceedings of the 11th National Conference on Artificial Intelligence (AAAI '93), pp. 182-187, USA, 1993> beschrieben. Dort werden Maßnahmen definiert durch einen Systemparameter, auf den sie sich beziehen, ein logisches Prädikat, das die Voraussetzungen der Maßnahme darstellt, sowie durch ihre Ziele. Die genannte Arbeit unterscheidet zwischen Wertabfragemaßnahmen, Einstelloperationen und Reparaturmaßnahmen, wobei zwischen den letzten beiden im Prinzip nicht unterschieden wird, weil sie beide einen Wert am betreffenden Parameter setzen. Die Kosten der Maßnahmen hängen von den Voraussetzungen ab. Sun und Weld benutzen eine separate Planungssoftware, um die Kosten für die Maßnahmen abzuschätzen. Sie geben ferner eine Formel für die Vorausabschätzung der "Kosten" an, in die in Wirklichkeit auch der zu erwartende Nutzen eingeht, weil sie die von de Kleer benutzte Entropiefunktion enthält.

Sun und Weld berechnen die Kosten der Ausführung eines Plans aus den Kosten der einzelnen Operationen. Sie haben jedoch nicht angegeben, wie die Kosten dieser Einzeloperationen für technische Systeme in der Realität gewonnen werden.

Eine modellbasierte Diagnose mit dem GDE-Ansatz wird sowohl von Johan deKleer als auch von Peter Struss durchgeführt. Auch Sun und Weld erklären, daß sie den GDE-Ansatz verwenden, wenngleich sie nicht näher beschreiben, wie und in welchem Umfang. Auch das Verfahren nach der Erfindung ist in eine modellbasierten Diagnoseeinrichtung nach dem GDE-Ansatz integriert worden.

Ein besonderes Merkmal des GDE-Ansatzes ist eine optimale Wiederverwendung von bereits erzielten Berechnungsergebnissen mit Hilfe eines unabhängigen Moduls zur Abhängigkeitsverwaltung von logischen Kontexten, einem RMS (Reason Maintenance System). Ein RMS hat das Ziel, einmal getätigte Berechnungen für möglichst viele Kontexte wiederzuverwenden und ihre wiederholte Berechnung zu ersparen. Die ursprünglich vorgestellte GDE benutzte ein speziell für sie entwickeltes RMS, das ATMS (Assumption-Based Truth Maintenance System), das für nachfolgende GDE-Versionen auf verschiedene Weise verbessert wurde. Das Atms wurde ursprünglich in <DE KLEER, Johan: An Assumption Based Truth Maintenance System. Artificial Intelligence 28, pp. 127-162, 1986> vorgestellt. Diese Arbeit ist jedoch schwer lesbar. Eine bessere Beschreibung findet sich in dem Buch <FORBUS, Ken / DE KLEER, Johan: Building Problem Solvers. MIT Press, 1993>, Seiten 425-455. Inzwischen sind auch GDE-Versionen mit RMSen beschrieben worden, die nicht zu der ATMS-Familie zählen. Einen ausführlichen überblick über verschiedene Atms-Varianten und allgemeine RMS gibt das Buch <FORBUS, Ken / DE KLEER, Johan: Building Problem Solvers. MIT Press, 1993>. Der Kern der GDE-Verfahren besteht aus einer Inferenzmaschine, die aus bereits berechneten oder auch gemessenen Werten von Parametem und der Kenntnis der Constraints des technischen Systems neue Werte von Parametern berechnet, wobei in jedem Schritt das RMS nach bereits bekannten Berechnungen und ihren Gültigkeitskontexten gefragt wird. Die Arbeitsschritte von Inferenzmaschine und RMS können (müssen aber nicht) zeitlich zum Zwecke einer weiteren Laufzeitinferenz vermischt werden ("consumer architecture"). In der Regel wird das RMS dazu benutzt, die Reihenfolge der durch die Inferenzmaschine getätigten Berechnungen zu steuern. Die Berechnungsreihenfolge ist auf diese Weise sehr stark durch das gewünschte Berechnungsergebnis (Ermittlung der besten Diagnosen) gesteuert und unterschiedet sich erheblich von der Reihenfolge, wie sie zum Zwecke einer vollständigen Simulation durchgeführt werden würde.

Die Laufzeit einer Diagnoseberechnung sowie die Anwendbarkeit der Diagnosesoftware auf bestimmte Fragestellungen aus der Praxis hängen in entscheidendem Maße von der Art des benutzten RMS und seiner Schnittstellen zur Inferenzmaschine ab.

Der in der Literatur beschriebene Stand der Technik für eine effiziente Schnittstelle zwischen RMS und Inferenzmaschine, auf dem das Verfahren nach der Erfindung aufsetzt, ist der folgende: Man definiert einen Fokus von Kontexten, an dem die Inferenzmaschine interessiert ist. Das RMS berechnet nur die Abhängigkeiten vollständig, die Auswirkungen auf Kontexte des Fokus hat. Die Berechnung anderer Abhängigkeiten wird ausgesetzt und in wohldefinierten Zwischenständen "geparkt" und erst weiterverfolgt, wenn der Fokus sich entsprechend geändert hat. Die Änderung des Fokusses kann vollkommen unabhängig vom RMS in der Inferenzmaschine vorgenommen werden und durch vom RMS unabhängige Verfahren gesteuert werden. Das RMS wird die angefragten Abhängigkeiten jederzeit selbständig nachführen. Ein derartiges ATMS heißt *fokussierendes ATMS* und ist in <DE KLEER, Johan / FORBUS, Ken: Focusing the ATMS. Proceedings of the 7th National Conference on Artificial Intelligence (AAAI '88), pp. 193-198, Saint Paul (MN, USA) 1988> und <DRESSLER, Oskar / FARQUHAR, Adam: Putting the Problem Solver Back in the Driver's Seat: Contextual Control of the ATMS, Lecture Notes in Al 515, Springer Verlag, 1990> beschrieben. Es gibt auch andere fokussierende RMSe, das JTMS (Justification-Based Truth Maintenance System) und das LTMS (Logic-Based Truth Maintenance System), die in dem Buch <FORBUS, Ken / DE KLEER, Johan: Building Problem Solvers. MIT Press, 1993> auf den Seiten 171-194 bzw. 265-305 beschrieben wurden. Eine besonders effiziente Ausgestaltung eines fokussierenden ATMS ist das *2-Sichten-ATMS* (siehe <TATAR, Mugur: Combining the Lazy Label Evaluation with Focusing Techniques in an ATMS. Proceedings of the 11th European Conference on Artificial Intelligence (ECAI '94), Amsterdam (Netherlands) 1994>).
In <DRESSLER, Oskar / FREITAG, Hartmut: Prediction Sharing Across Time and Contexts, Proceedings of the 12th National Conference on Artificial Intelligence (AAAI '94), pp. 1136-1141, Seattle (WA, USA) 1994> ist erstmalig die Aufgabe angegangen worden, Inferenzen für verschiedene Zeitpunkte wiederzuverwenden. In dieser Arbeit wurden Annahmenmodellierungen für zeitliche Aspekte vorgestellt, jedoch nicht die Frage der Schnittstelle und Steuerung zwischen RMS und Inferenzmaschine untersucht. Das Ziel, Berechnungen ausschließlich für vorgegebene Zeitpunkte durchzuführen *unter Beibehaltung der Eigenschaft, Inferenzen für verschiedene Zeitpunkte wiederzuverwenden*, ist noch nicht formuliert worden.

Modellbasierte Diagnoseeinrichtungen können für mehr Fragestellungen eingesetzt werden als für die Diagnose allein. Daher seien im folgenden vier Anwendungsmöglichkeiten aufgeführt, die zum Stand der Technik gehören:
1. Anwendungsmöglichkeit: FMEA und Sicherheitsanalyse
   Die Verwendung des systematischen Testvorschlags ist bereits oben beschrieben worden.
   Dieses Verfahren eignet sich uneingeschränkt für die off-board-Diagnose. Für die on-board-Diagnose ist es prinzipiell auch geeignet, kann aber wegen der Antwortzeiten (nicht immer echtzeitfähig) außer Betracht fallen.
2. Anwendungsmöglichkeit: *Design-for-Diagnosis*
   Der systematische Testvorschlag kann für das Entwicklungsproblem *Design-for-Diagnosis* eingesetzt werden: Der Entwickler gibt Fehler vor, die er unterscheiden möchte und läßt sich ausrechnen, wo er diese Fehler besonders gut unterscheiden kann. Dieses liefert ihm Hinweise, welcher Parameterwert leicht meßbar sein sollte.
3. Anwendungsmöglichkeit: *FMEA*
   Während der Entwicklung eines technischen Systems wird aus verschiedenen Gründen eine FMEA (failure modes effects analysis) durchgeführt. Eine modellbasierte Diagnoseeinrichtung kann leicht zu einer modellbasierten FMEA erweitert werden, die folgende Aufgabenstellungen beherrscht:
   a) Gegeben ein technisches System, eine Menge von Diagnosen und eine Menge von Situationen. Berechne die Werte, die bestimmte Parameter unter den vorliegenden Diagnosen und Situationen annehmen können.
   b) *Sicherheitsanalyse:* Gegeben ein technisches System und eine Menge von kritischen Werten für bestimmte Parameter. Berechne die Situationen und Diagnosen, unter denen diese Werte angenommen werden können.
   Jedes modellbasierte Diagnosesystem prüft die Konsistenz einer Diagnose durch sukzessive Propagation von Werten, die sich aus der Diagnose zwingend ergeben. Wenn diese Propagation für jede Diagnose, die betrachtet werden soll, vollständig durchgeführt wird, kann die Antwort auf die Fragen a) und b) leicht ermittelt werden.
4. Anwendungsmöglichkeit: *Entscheidungsbaumgenerierung*

Entscheidungsbäume für ein technisches System sind eine baumartige Struktur, in deren Wurzel eine Ausgangssituation steht und in deren Blättern Endsituationen stehen. Dazwischen werden Aktionen für das technische System angegeben, die endlich viele verschiedene Ergebnisse haben können.

Entscheidungsbäume können unterschiedlich definiert werden. Eine mögliche Definition ist folgende: *Entscheidungsbäume* bestehen aus einer Abfolge von Entscheidungsknoten und Ergebnisknoten. In den *Ergebnisknoten* stehen Aussagen über das Diagnoseziel (z.B. die Angabe der noch möglichen Diagnosen), die mit den bisher durchgeführten Entscheidungen konsistent sind. Ein Ergebnisknoten ist entweder ein Blatt oder hat als Nachfolger einen Entscheidungsknoten. In den *Entscheidungsknoten* werden Aktionen angegeben, die den vorausgegangenen Ergebnisknoten verfeinern sollen. Die Aktionen können endlich viele Resultate haben. Für jedes Resultat gibt es einen nachfolgenden Ergebnisknoten.
Es gibt kommerziell erhältliche entscheidungsbaumbasierte Diagnoseeinrichtungen, d.h. Diagnoseeinrichtungen, die Entscheidungsbäume als Eingabewissen über das technische System erfordern. Eine solche Diagnoseeinrichtung ist nicht mehr modellbasiert zu nennen. Für diese sind natürlich verschiedene Verfahren angegeben worden, wie man die Entscheidungsbäume effizient akquiriert. Es ist aber bisher nicht bekanntgemacht worden, daß die systematische Generierung von Entscheidungsbäumen aus rein modellbasiertem Diagnosewissen veröffentlicht oder eingesetzt worden ist.

Ein Entscheidungsbaum kann für verschiedene Zwecke eingesetzt werden:
a) Modellbasierte Generierung eines Fehlerbaums (das wird in vielen Fällen von Kontrollbehörden erwartet).
b) Anbindung an eine entscheidungsbaumbasierte Diagnoseeinrichtung: Im Gegensatz zu modellbasierten Diagnoseeinrichtungen sind entscheidungsbaumbasierte Diagnoseeinrichtungen leichter echtzeitfähig und damit breiter anwendbar für die on-board-Diagnose.

Der Artikel <Computers & chemicals engineering, Aug. 1991, UK, Bd. 15, Nr. 8, Seiten 583 - 599, CATINO C A et al: "Automatic generation of quality models of chemical process units"> beschreibt, daß aus einer Bibliothek von Komponenten ein Modell eines technischen Systems aufgebaut wird, und mit diesem Modell Simulationen und auch Diagnosen durchgeführt werden. Es wird nicht erwähnt, wie man Informationen organisiert und abspeichert, die festlegen, wie man Parameter mißt und unter welchen Maßnahmen diese *Messungen* (= Maßnahmen) zulässig sind. Maßnahmen sind nicht als eigene "Objekte" in den Speichern der Diagnose- und Simulationseinrichtung erwähnt.

Die Veröffentlichung <JIAH-SHING CHEN et al: "Action selection in interactive model-based diagnosis", 2. März 1992, Proceedings of the conference on artificial intelligence applications, Monterey, March 2 - 6, 1992, Nr. Conf. 8, pages 67 - 73, Institute of electrical and electronics engineers> beschreibt eine mögliche Bewertung der Maßnahmen. Es wird aber kein Weg aufgezeigt, wie aus möglichst wenigen Eingangsinformationen die erforderlichen Informationen über Maßnahmen generiert werden. Weiterhin wird kein Weg aufgezeigt, wie während einer Diagnose die nächste Maßnahme jeweils effizient bestimmt wird.

Die Veröffentlichung <BERINGER et H al: "Diagnosis systems modeled with piecewise linear constraints", 6. November 1990, Proceedings of the international conference on tools for artificial intelligence, Herndon, November 6 - 9, 1990, Nr. Conf. 2, pages 308 - 313, Institute of electrical and electronics engineers> beschreibt eine Diagnoseeinrichtung, bei der eine Inferenzmaschine gemessene Werte von Parametern durch ein Modell des Diagnosegegenstandes "propagiert". Maßnahmen werden nicht erwähnt - präziser: Wie die Meßwerte für eine Diagnose gewonnen werden, ist nicht Thema der Veröffentlichung. Es wird ausschließlich beschrieben, wie ein gegebenes Modell für das Verhalten eines technischen Systems, das eine bestimmte Form hat, automatisch so umgeformt werden kann, daß das umgeformte Modell schnell durchgerechnet werden kann.

Es werden Fokussierungstechniken genannt. Der Fokus wird dazu benutzt, um die Simulation auf bestimmte Teile des Diagnosegegenstandes oder auf bestimmte Betriebsbedingungen einzuschränken. Den Fokus legt offenbar ein menschlicher Entwickler einmal vorab fest, und der Fokus bleibt während einer Simulation der Diagnose konstant. Ein Reason Maintenance System (RMS) wird daher nicht benötigt und auch nicht erwähnt.

Für die Aufgabe der Erfindung wird davon ausgegangen, daß ein technisches System gegeben ist, das aus mindestens zwei Komponenten zusammengesetzt ist.

Die physikalischen Gesetze des technischen Systems seien beschrieben durch die Angabe einer Verbindungsliste, die festlegt, welche Komponente über welchen Parameter mit welcher anderen Komponente an welchem anderen Parameter verbunden ist, und eine Zuordnung der Komponenten zu Komponententypen. Der Typ einer Komponente legt fest, welche lokalen Parameter für die Komponente definiert sind und definiert Constraints zwischen diesen Parametern. Im folgenden wird eine solche Beschreibung als *komponentenorientiertes Systemmodell* bezeichnet.
Gesucht ist ein Konzept und Verfahren, das Probleme in der Diagnose technischer Systeme, im Design-for-Diagnosis, in der Sicherheitsanalyse und in der FMEA unter Verwendung von Maßnahmen löst. Das Konzept und Verfahren soll auf alle Probleme anwendbar sein, die von modellbasierten Diagnoseverfahren bearbeitet werden, insbesondere auf:
1. Automatische Akquisition von Maßnahmen und ihren Abhängigkeiten für das gesamte System aus der Kenntnis der Komponententypen und dem komponentenorientierten Systemmodell
2. Bestimmung der Meßbarkeit oder Zugänglichkeit eines Parameters
3. Bestimmung der Meß- oder Zugänglichkeitskosten eines Parameters
4. Bestimmung des Kosten-Nutzen-Verhältnisses eines Parameters
5. Bestimmung der Situation, aus der der Parameter resultiert, der die geringsten Meßoder Zugänglichkeitskosten hat
6. Bestimmung der Situation, aus der der Parameter resultiert, der das beste Kosten-Nutzen-Verhältnis hat
7. Bestimmung der Möglichkeit, einen bestimmten Wert an einem Parameter einzustellen
8. Bestimmung der Möglichkeit, ob bestimmte Werte an einem Parameter auftreten können
9. Bestimmung der Einstellkosten eines Wertes an einem Parameter
10. Bestimmung der Einstellkosten einer neuen Situation aus einer Ausgangssituation
11. Bestimmung der Situation, aus der der Parameter resultiert, der die geringsten Meßoder Zugänglichkeitskosten hat, relativ zu einer Ausgangssituation
12. Bestimmung der Situation, aus der der Parameter resultiert, der das beste Kosten-Nutzen-Verhältnis hat, relativ zu einer Ausgangssituation

Aus Ying Sun / Daniel Weld: "A Framework for Model-Based Repair", Proceed. 11th National Conference on Artificial Intelligence (AAAI '93), pp. 182 -187, USA, 1993, sind globale Maßnahmen bekannt, deren Voraussetzungen irgendwelche Kontexte des technischen Systems sein können. Dieser Stand der Technik erfordert, daß man beim Wissenserwerb für jede Maßnahme an jeder Komponente ihre Voraussetzungen erneut beschreiben muß. Man kann nicht den Fall ausnutzen, daß mehrere gleichartige Komponenten, d. h. Komponenten gleichen Typs, vorhanden sind - auch gleichartige Komponenten muß man mehrmals beschreiben.

In dem Fall, daß die verwendete modellbasierte Diagnoseeinrichtung eine Inferenzmaschine enthält, die auch Inferenzen über die Zeit zuläßt, sowie ein RMS, sucht das Verfahren nach der Erfindung eine Schnittstelle, über die Inferenzmaschine und RMS miteinander kommunizieren, sowie eine Steuerung, die es ermöglicht, Berechnungen, die sich auf verschiedene Zeitpunkte beziehen, effizient durchzuführen.

Ferner sucht das Verfahren nach der Erfindung nach der Möglichkeit, Entscheidungsbäum aus Entscheidungsknoten und Ergebnisknoten (wie in der 4. Anwendungsmöglichkeit definiert) auszugeben.

Der Erfindung liegt die Aufgabe zugrunde, ein Modell eines technischen Systems für Zwecke der Diagnose, Design-for-Diagnosis, FMEA und / oder Sicherheitsanalyse automatisch aus modularen Bausteinen für Komponententypen, Zuordnung von Komponenten zu Komponenten-Typen und einer Verbindungsliste zu erzeugen. Hierbei umfaßt das Modell mindestens zwei Komponenten mit jeweils mindestens einem Parameter, und für mindestens einen dieser Parameter ist zu einem Zeitpunkt, an dem das Modell angewendet wird, aus dem Modell automatisch die Meßbarkeit oder Zugänglichkeit des Parameters und / oder die Kosten, um den Wert des Parameters zu ermitteln oder ihn auf einen bestimmten Wert einzustellen, zu bestimmen.

Diese Aufgabe wird hinsichtlich des Ziels, Kosten aus modularen Bausteinen zu gewinnen, um einen effizienten Wissenserwerb der Kosten zu ermöglichen, durch das im Patentanspruch 1 beschriebene Verfahren gelöst.
Die entscheidende Idee der Erfindung ist es, sogenannte Maßnahmen *lokal* für die Komponententypen zu definieren: Für einen Komponententyp werden also nicht nur die Parameter, Ports, Constraints und Verhaltensmodi definiert, sondern auch Maßnahmen, die sich auf die lokalen Parameter des Komponententyps beziehen. Fragestellungen der modellbasierten Diagnose (wie in der Problemstellung genannt) werden gelöst, indem die Gültigkeit von Maßnahmen überprüft wird. Daher hat jede Maßnahme logische Kontexte als Voraussetzungen, die festlegen, ob eine Maßnahme gültig ist oder nicht. Die logischen Voraussetzungen einer lokalen Maßnahme seien durch die geforderte Belegung von Parametern der gleichen Komponente mit bestimmten Werten definiert. Im folgenden sei die Belegung von Parametern mit Werten als *Wertekontext* bezeichnet.
In einem komponentenorientierten Systemmodell wird die Gültigkeit einer lokalen Maßnahme in Abhängigkeit von beliebigen Wertekontexten dadurch bestimmt, daß die Werte mit Hilfe einer Inferenzmaschine durch das System propagiert werden (wobei das jeweilige Inferenzverfahren beliebig sein kann), bis eine Aussage über die Gültigkeit der Voraussetzungen der lokalen Maßnahme gemacht werden kann. Sinnvollerweise werden die Inferenzen nicht gesondert für die Maßnahmen berechnet, sondern nur die verwendet, die das modellbasierte Diagnoseverfahren ohnehin anstellt.
Die Erfindung hebt sich vom Stand der Technik dadurch ab, daß die Maßnahmen nicht global definiert werden müssen, sondern lediglich in den Komponententypen. Die Maßnahmen werden damit nach den gleichen Prinzipien modelliert wie die physikalischen Gesetze. Daher vereinfacht sich der Wissenserwerb in dem Maße, wie er sich auch für die physikalischen Gesetze vereinfacht.

Das Verfahren nach der Erfindung ist keine parallele Alternative zum Stand der Technik, der globale Maßnahmen kennt, deren Voraussetzungen irgendwelche Kontexte des technischen Systems sein können, sondern eine echte Erweiterung: In den meisten Fällen kann man bei der Aufstellung der modularen Bausteine, die erfindungsgemäß bei der automatischen Erzeugung der Module verwendet werden, globale Maßnahmen auf lokale Maßnahmen zurückführen. Dann läßt sich das erfindungsgemäße Verfahren direkt anwenden. In den Fällen, in denen das nicht geht, führt man einen eigenen Komponententyp für das System als solches ein und definiert die Maßnahme für diesen "Komponententyp". Dann ist sie im hier definierten Sinne eine lokale Maßnahme. Das gleiche Vorgehen wird im bereits bekannten Stand der Technik verwendet, um globale Constraints zu definieren. Natürlich büßt man den Vorteil des effizienten Wissenserwerbs um so mehr ein, je mehr globale Maßnahmen man auf diese Weise definiert. Das Verfahren nach der Erfindung hat also dann einen Vorteil, wenn die lokalen Maßnahmen für Komponententypen definiert werden, die nicht alle Parameter des gesamten Systems umfassen. Dieser Vorteil wird um so größer, wenn das gesamte System aus vielen gleichartigen Komponententypen besteht, da die Maßnahmen natürlich nur einmal für jeden Typ definiert werden müssen.

Vorzugsweise wird ein Reasoning Maintenance System (RMS) verwendet, um Berechnungsergebnisse wiederzuverwenden und um dadurch bei verschiedenen vorgegebenen Wertekontexten die Gültigkeit einer Maßnahme zu bestimmen. Das RMS verwaltet dabei die Abhängigkeit der durch das System propagierten Parameterwerte von den verschiedenen Wertekontexten.

Bekannt sind verschiedene Reasoning Maintenance Systems. Vorzugsweise wird aber eine neuartige Ausgestaltung des RMS verwendet, die im folgenden beschrieben wird. Die Ausgestaltung schafft eine effiziente und flexible Schnittstelle und Steuerung zwischen RMS und Inferenzmaschine, die es ermöglicht, auch Inferenzen für verschiedene Zeitpunkte wiederzuverwenden und die Berechnungen nur für Zeitpunkte, die durch eine externe Steuerung vorgegeben sind, durchzuführen.

Die Werte der Parameter eines technischen Systems hängen von folgenden Kontexten ab: Eine Situation belegt alle frei wählbaren Eingabeparameter mit Werten. Die Gültigkeit der Constraints, d.h. der Beziehungen, die zwischen den Parametern gelten, wird durch die Verhaltensmodi festgelegt, in denen sich die Komponenten befinden. Alle anderen Werte von Parametern des technischen Systems resultieren aus der gegebenen Situation und der gegebenen Belegung mit Verhaltensmodi. Solange sich weder die Situation noch die Verhaltensmodi der Komponenten ändern, können sich auch nicht die anderen Werte ändern. Daher ist es sinnvoll, die Werte, die zu einer bestimmten Situation und einer bestimmten Belegung von Verhaltensmodi im System anliegen, dem gleichen Zeitpunkt zuzuordnen. Ein Zeitpunkt ist also definiert durch die Angabe der Situation und der Belegung der Komponenten mit Verhaltensmodi.
Das Verfahren nach der Erfindung verwendet die Zeit als Steuerung der Inferenzmaschine: Inferenzen werden nur für bestimmte Zeitpunkte berechnet. Für jeden Zeitpunkt wird streng unterschieden zwischen Fakten, die man als sicher ansieht und im Laufe der Diagnoseberechnung niemals zurückzieht, und Fakten, mit denen man hypothetisch arbeitet, die aber unter Umständen zurückgezogen werden, wenn sie zu Konflikten führen. Beide Typen von zeitabhängigen Fakten werden als Annahmen im verwendeten RMS verwaltet. Das Verfahren nach der Erfindung unterscheidet demnach zwischen *permanenten Annahmen* und *zurückziehbaren Annahmen* bzw. zwischen permanenten Annahmemengen und zurückziehbaren Annahmemengen.

Beispiele für permanente Annahmen sind Systemeingaben (die entsprechenden Annahmemengen sind dann die Situationen) oder Beobachtungen, deren Gültigkeit nicht in Zweifel gezogen werden. Beispiele für zurückziehbare Annahmen sind Zuordnungen von Verhaltensmodi an Komponenten (die entsprechenden Annahmemengen sind die Diagnosekandidaten) oder Hypothesen über bestimmte Parameterwerte, die nicht gemessen werden können oder deren Messung als unsicher gilt, oder aus Effizienzgründen vorgenommene Vereinfachungen der physikalischen Gesetze, die im Laufe des Programmablaufs verfeinert werden müssen.

Das Verfahren nach der Erfindung benutzt als RMS ein fokussierendes RMS, wobei ein beliebiges fokussierendes RMS gewählt werden kann. Im Gegensatz zur üblichen Vorgehensweise kommunizieren in dem Verfahren nach der Erfindung Inferenzmaschine und RMS nicht über den RMS-Fokus, sondern über zwei getrennte *externe* Foki, von denen der eine ausschließlich zurückziehbare und der andere nur permanente Annahmemengen enthält. Die Inferenzmaschine bestückt diese externen Foki und ist damit in der Lage, permanente und zurückziehbare Annahmemengen durch getrennte Steuerungsmechanismen zu verwalten. Das RMS setzt nun aus einem gegebenen externen Fokuspaar seinen *internen* Fokus zusammen, indem es jedes Element des einen Fokus mit jedem Element des anderen Fokus konjunktiv miteinander verbindet. Jede Bearbeitung der externen Foki löst eine entsprechende Aktualisierung des RMS bezüglich seines internen Fokus aus. Mit diesem internen Fokus arbeitet das RMS dann in gewohnter Weise.

Ein Vorteil dieser Architektur ergibt sich für den Fall, daß das RMS einen Konflikt findet: Das RMS teilt den Konflikt in üblicher Weise der Inferenzmaschine mit und aktualisiert seinen internen Fokus. Die Inferenzmaschine kann nun die permanenten Annahmen, die an dem Konflikt beteiligt sind, von den zurückziehbaren trennen und seine Foki entsprechend bearbeiten. In der Regel wird es sinnvoll sein, die permanten Annahmen nicht zu verdächtigen und den zurückziehbaren Teil als den eigentlichen Konflikt zu betrachten. In diesem Fall wird die entsprechende zurückziehbare Annahmemenge aus dem zurückziehbaren Fokus gestrichen, was eine Aktualisierung im internen Fokus des RMS zur Folge hat.

Im folgenden werde ein fokussierendes RMS mit einem internen Fokus und einer Steuerung durch die Inferenzmaschine durch zwei exteme Foki als 2-Fokus-RMS bezeichnet.

Das Verfahren der Erfindung funktioniert mit jeder Steuerung der Inferenzmaschine, die externen Foki zu bestücken und ist hinsichtlich des Ziels, eine effiziente und flexible Schnittstelle und Steuerung zwischen RMS und Inferenzmaschine zu verwenden, die es ermöglicht, auch Inferenzen für verschiedene Zeitpunkte wiederzuverwenden und die Berechnungen nur für durch eine externe Steuerung vorgegebene Zeitpunkte durchzuführen, für eine allgemeine Steuerung in Anspruch 22 beschrieben. Für eine genauere Spezifikation der Steuerung muß zwischen der Diagnose von statischen und der Diagnose von dynamischen Systemen unterschieden werden.

Ein statisches System hängt ausschließlich von der Belegung seiner Eingabeparameter ab, in der oben eingeführten Notation also von den Situationen. Die Verhaltensmodi sind zwar unbekannt, aber fest und ändern sich nicht (ein Komponentenausfall während der Diagnoseberechnung wird nicht betrachtet). Damit sind die Zeitpunkte eindeutig durch die Angabe der jeweils betrachteten Situation beschrieben. In den permanenten Fokus werden alle Situationen gelegt, die betrachtet werden sollen, in den zurückziehbaren Fokus kommen alle Diagnosekandidaten, zwischen denen unterschieden werden soll und die mit der Systembeschreibung und den bisher gemachten Beobachtungen konsistent sind. Dieses reicht als "Steuerung" bereits aus. Das RMS berechnet nach dem Verfahren der Erfindung ausschließlich Werte, die in den festgelegten Situationen gelten und die mit den zu unterscheidenden Diagnosekandidaten konsistent sind, und teilt Konflikte zwischen den Annahmen der Inferenzmaschine mit. Die Inferenzmaschine streicht aus allen mitgeteilten Konflikten die Situationsannahmen, deklariert die verbleibende zurückziehbare Annahmemenge als Konflikt und streicht sie aus dem zurückziehbaren Fokus. Das RMS aktualisiert daraufhin seinen internen Fokus, d.h. die Kombination der entsprechenden Konfliktmenge auch mit allen anderen Situationen wird als Konflikt deklariert und nicht weiter betrachtet. Dieses Verfahren ist in Anspruch 23 beschrieben.

Ein dynamisches System hängt zusätzlich zur Belegung der Eingabeparamter auch von der Belegung der Komponenten durch ihre Verhaltensmodi ab. Diese Verhaltensmodi werden in dynamischen Systemen üblicherweise mit Zuständen bezeichnet und können sich in Abhängigkeit des Anfangszustands, den es in der Diagnose zu bestimmen gilt, und der sukzessive eingestellten Situationssequenzen ändern. Die Inferenzmaschine braucht eine separate Registrierung, die festlegt, zu welchem Zeitpunkt welche Situationen in Kombination mit welchen Zustandsmengen gelten. Das Aufstellen und die Steuerung einer solchen Registrierung ist in <TATAR, Mugur: Diagnosis with Cascading Defects. Working Papers of the 6th International Workshop on Principles of Diagnosis (DX '95), pp. 107-114, Goslar (Germany) 1995> beschrieben. Das Verfahren der Erfindung setzt daher voraus, daß eine solche Registrierung vorliegt und bestückt die beiden Foki des 2-Fokus-RMS sukzessive für jeden Zeitpunkt neu: In den permanenten Fokus kommen die entsprechenden Situationen und in den zurückziehbaren Fokus die entsprechenden Zustandsmengen. Das 2-Fokus-RMS arbeitet dann in der gleichen Weise wie im statischen Fall. Diese Ausgestaltung eines RMS hebt sich von den bekannten Ausgestaltungen eines RMS dadurch ab, daß eine Benutzung von verschiedenen Foki für Inferenzmaschine und RMS noch nicht beschrieben wurde und natürlich auch nicht die hier beschriebene Steuerung, d.h. das automatische Zusammensetzen der verschiedenen Fokusteile durch das RMS und die Reaktion der Inferenzmaschine im Konfliktfall.

Die Erfindung hebt sich vom bekannten Stand der Technik dadurch ab, daß die Entscheidungsbäume aus rein modellbasiertem Wissen generiert werden. Das Verfahren garantiert eine besondere Qualität der generierten Entscheidungsbäume, da die Entscheidungsbäume unterschiedliche Situationen berücksichtigen, ferner Kosten von Einstellungen und Messungen und diese auch noch mit dem zu erwartenden Informationsgewinn verrechnen.

Die vorteilhaften Ausgestaltungen der Erfindung sind in den übrigen Ansprüchen beschrieben: Vorteilhafterweise wird bei der Erzeugung des Systemmodells eine Verbindungsliste verwendet (Anspruch 2). Diese Verbindungsliste umfaßt für mindestens ein Paar von zwei benachbarten Komponenten K1, K2 die Information, welche Parameter an der Komponente K1 mit welchen Parametern an der Komponente K2 verbunden sind. Bei der Erzeugung des Systemmodells wird die Verbindungsliste automatisch ausgewertet, indem für jede in der Verbindungsliste enthaltene Information, daß ein Parameter p1 an der Komponente K1 mit einem Parameter p2 an der Komponente p2 verbunden ist, eine der folgenden beiden Verfahrensschritte durchgeführt wird:
a) Die Parameter p1 und p2 werden durch eine eindeutige Kopie p ersetzt, wobei p in jeder Maßnahme, die für p1 oder p2 definiert ist, anstelle von p1 bzw. p2 eingesetzt wird, ebenso in jeder Menge von für die Maßnahme vorausgesetzten Werten.
b) Es wird dem Systemmodell ein in jedem Fall zu erfüllender Constraint hinzugefügt, der verlangt, daß die Werte von p1 und p2 gleich sind.
Mit Hilfe einer Verbindungsliste läßt sich eine globale Maßnahme als eine lokale Maßnahme an einer Komponente K beschreiben, indem diejenigen Parameter der Maßnahmenvoraussetzung, die nicht zu K gehören, über einen Pfad von jeweils benachbarten Komponenten mit den Parametern an K verbunden werden und diese Informationen in der Verbindungsliste beschrieben werden. Für die globale Maßnahme wird eine lokale Maßnahme an K eingeführt, und in der Voraussetzung der lokalen Maßnahme werden Parameter an K genannt.

Anspruch 1 bezieht sich auf den Einsatz in beliebigen modellbasierten Diagnoseverfahren, die mit Wertepropagation, d.h. mit einer Inferenzmaschine arbeiten. Eine besonders effiziente Propagation wird dadurch erreicht, daß die Propagation von einem RMS unterstützt wird, was der Kern des GDE-Ansatzes ist (Anspruch 3). Dieser Vorteil bezieht sich natürlich auch auf alle weiteren Ausgestaltungen von Anspruch 1 (Anspruch 26), die sich ansonsten ebenfalls auf den Einsatz in beliebigen modellbasierten Diagnoseverfahren beziehen, die mit einer Inferenzmaschine arbeiten.
Die praktischen Vorteile des in Anspruch 1 formulierten allgemeinen Vorgehens ergeben sich durch die Verwendung von lokalen Maßnahmen für in der Aufgabenstellung genannte Konzepte wie Meßbarkeit, Einstellkosten, usw. Im folgenden werden die einzelnen Verwendungen von lokalen Maßnahmen erklärt. Einige dieser Verwendungen sind bereits für allgemeine Maßnahmen bekannt, nicht aber für die Verwendung von *lokalen* Maßnahmen. Einige dieser Verwendungen sind aber für Maßnahmen im allgemeinen noch nicht bekannt. Der entscheidende Vorteil für die Praxis besteht für jeden dieser Unteransprüche, wenn er mit dem effizienten Wissenserwerb gemäß Anspruch 2 kombiniert wird (Anspruch 27).
Die Meß- und Zugänglichkeit von Parametern kann durch Maßnahmen direkt definiert werden (Anspruch 4).
Wenn auch die Meß- und Zugänglichkeitskosten betrachtet werden sollen, werden *bewertete* Maßnahmen benötigt, die zusätzlich zu allgemeinen Maßnahmen noch einen Unterspeicher für die Kosten haben (Anspruch 6). Wenn die Meßkosten für einen Parameter unterschiedlich sein können und von jeweils unterschiedlichen Voraussetzungen abhängen, dann muß für jede dieser Voraussetzungen eine Maßnahme definiert werden. Das ist nicht nötig, wenn sich die Voraussetzungen nur in den *Werten* der Parameter unterscheiden, nicht jedoch in den Parametern selbst. In diesem Fall ist es ausreichend, im Unterspeicher für die Kosten eine Funktionsvorschrift anstelle eines festen Wertes abzulegen.
Das Verfahren nach Anspruch 5 kann noch einmal spezialisiert werden, wenn anstelle einer direkt mit den Maßnahmenkosten arbeitenden Kostenfunktion eine Kosten-Nutzen-Heuristik verwendet wird, die den aus den Maßnahmenkosten resultierenden Kostenwert mit einer getrennt ausgerechneten Nutzenfunktion verrechnet. In der beanspruchten Ausgestaltung kann jede Funktion, die zwei Zahlen auf eine neue Zahl abbildet, verwendet werden (Anspruch 8).
Als Beispiel einer getrennt ausgerechneten Nutzenfunktion sei die in <DE KLEER, Johan / WILLIAMS, Brian: Diagnosing Multiple Faults. Artificial Intelligence 32 (1), pp. 97-130, 1987> angegebene und in vielen modellbasierten Diagnoseeinrichtungen verwendete Entropiefunktion aufgeführt. Die Funktion, die in <SUN, Ying, / WELD, Daniel: A Framework for Model-Based Repair. Proceedings of the 11th National Conference on Artificial Intelligence (AAAI '93), pp. 182-187, USA, 1993> angegeben ist, verrechnet diese Nutzenfunktion mit den Kosten. Der konkrete Vorteil einer bestimmten Kosten-Nutzen-Heuristik für eine praktische Anwendung läßt sich häufig nur empirisch, aber nicht mathematisch belegen. Es ist auch nicht Gegenstand der Erfindung, eine bestimmte Kosten-Nutzen-Heuristik zu verwenden. Es besteht vielmehr der Anspruch, daß jede vom Modellierer gewählte Funktion in das erfindungsgemäße Maßnahmenkonzept eingebaut werden kann. Der entscheidende Vorteil besteht in der freien Wählbarkeit der Kosten-Nutzen-Heuristik, weil für verschiedene Anwendungen jeweils unterschiedliche Heuristiken die günstigsten sein können.
Die mehrfache Anwendung des Verfahrens nach Anspruch 5 liefert die Lösung einer neuen Variante des Problems *Systematischer Testvorschlag,* nämlich die, daß anstelle des Nutzens die Kosten berücksichtigt werden (Anspruch 10). Anspruch 9 beschreibt dieses Verfahren für eine Verallgemeinerung dieses Problems, in der die Situationen durch allgemeine Wertekontexte ersetzt werden. In dieser Form wird das Problem in <SUN, Ying, / WELD, Daniel: A Framework for Model-Based Repair. Proceedings of the 11th National Conference on Artificial Intelligence (AAAI '93), pp. 182-187, USA, 1993> angegangen, allerdings nur für globale Maßnahmen. Situationen sind bestimmte Wertekontexte, nämlich die, in denen alle freien Eingabeparameter mit Werten belegt werden.
Der Unterschied des Verfahrens nach der Erfindung zum Verfahren nach <STRUSS, Peter: Testing for Discrimination of Diagnosis. Working Notes of the 5th International Workshop on Principles of Diagnosis, pp. 312-320, New Paltz (NY, USA) 1994> besteht darin, daß hier die untersuchten Wertekontexte vorgegeben werden, deren Auswirkungen durch Vorwärtssimulation berechnet werden und nur unter den vorgegebenen Wertekontexten die optimalen gesucht werden. Struss geht dagegen von den zu unterscheidenden Diagnosen aus und versucht, den optimalen Wertekontext zu berechnen, unabhängig davon, ob dieser Wertekontext günstig zu erreichen ist (also nicht viel "kostet") oder nicht. Der entscheidende praktische Vorteil des Verfahrens nach der Erfindung ergibt sich durch die Kombination mit weiter unter beschriebenen Ausgestaltungen, die in dieser Form mit der Technik von Struss nicht möglich ist.
Analog zur Spezialisierung des Verfahrens von Anspruch 5 wird das Verfahren von Anspruch 7 spezialisiert (Anspruch 11), ebenso das aus Anspruch 10 (Anspruch 12), indem die direkte Kostenermittlung durch eine beliebige Kosten-Nutzen-Heuristik ersetzt wird.
Eine andere Spezialisierung von (lokalen) Maßnahmen sind (lokale) Wertbelegungsmaßnahmen. In diesen wird in einem separaten Unterspeicher ein Wert abgelegt, den der Parameter, für den diese Maßnahme gilt, erhalten soll. Wenn ein Parameter unterschiedliche Werte erhalten soll, abhängig von unterschiedlichen Voraussetzungen, dann sind für verschiedene Werte verschiedene Wertbelegungsmaßnahmen zu definieren. Das ist nicht nötig, wenn sich die Voraussetzungen nur in den *Werten* der vorausgesetzten Parameter unterscheiden, nicht jedoch in den vorausgesetzten Parametern selbst. In diesem Fall ist es ausreichend, im Unterspeicher für den Wert, den der Parameter, für den die Maßnahme gilt, erhalten soll, eine Funktionsvorschrift anstelle eines festen Wertes abzulegen.

Eine Anwendung von (lokalen) Wertbelegungsmaßnahmen besteht darin, mit ihrer Hilfe die Möglichkeit zu definieren, ob ein bestimmter Wert an einem Parameter auftreten kann und mit Verfahren nach Anspruch 1 zu untersuchen, unter welchen Bedingungen ein Wert an einem Parameter auftreten kann (Anspruch 13). Eine vorteilhafte Ausgestaltung besteht darin zu fragen, unter welchen Bedingungen kritische Werte an einem Parameter auftreten können, eine Fragestellung der Sicherheitsanalyse (Anspruch 15). Eine weitere Anwendung von (lokalen) Wertbelegungsmaßnahmen besteht darin, mit ihrer Hilfe die Möglichkeit zu definieren, ob ein bestimmter Wert an einem Parameter eingestellt werden kann und mit dem Verfahren nach Anspruch 1 zu untersuchen, unter welchen Bedingungen er eingestellt werden kann (Anspruch 16).
Mit *bewerteten* (lokalen) Wertbelegungsmaßnahmen kann definiert werden, was es unter welchen Voraussetzungen kostet, einen Wert einzustellen (Anspruch 18). Anspruch 20 beschreibt eine vorteilhafte Ausgestaltung von Anspruch 18, in der aus einer vorgegebenen Ausgangssituation die Einstellkosten einer neuen Situation berechnet werden.
Die vorteilhafte Ausgestaltung mit dem größten praktischen Nutzen liegt darin, das Verfahren nach Anspruch 20 mit den vorher beschriebenen Ausgestaltungen zu kombinieren, indem unter mehreren Situationen diejenige bestimmt wird, in der ein Parameter die besten Meßkosten oder das beste Kosten-Nutzenverhältnis aufweist. In der Kombination wird auch berücksichtigt, in welcher Ausgangssituation sich das technische System gerade befindet, so daß nicht jede Zielsituation gleich gut zu erreichen ist. Es ist diese Fragestellung, die durch das oben zitierte Verfahren von Struss nicht zielgerichtet bearbeitet werden kann.
Anspruch 22 beschreibt das Verfahren, ausgehend von einer vorgegebenen Ausgangssituation und einer vorgegebenen Menge von Zielsituationen die Zielsituation zu finden, aus der der Parameter mit den günstigsten Meßkosten resultiert. Es wird dann diese Zielsituation und die Messung des entsprechenden Parameters als günstigster Test vorgeschlagen. Anspruch 24 beschreibt das gleiche Verfahren wie in Anspruch 22, jedoch mit der Frage nach dem günstigsten Kosten-Nutzen-Verhältnis anstelle der günstigsten Meßkosten.
Für beide Verfahren müssen die Kosten, um von der Ausgangssituation in die Zielsituation zu gelangen mit den Kosten bzw. dem Kosten-Nutzen-Verhältnis, um in dieser Zielsituation den Parameter zu messen, verrechnet werden. Analog zu dem oben beschriebenen Kosten-Nutzen-Verhältnis kann hier jede Funktion verwendet werden, die zwei Zahlen, resultierend aus den "Einzelkosten" auf eine neue Zahl, die "Gesamtkosten", abbildet. Bezüglich dieser Ausgestaltung des Verfahrens kann jede Funktion, die zwei Zahlen auf eine neue Zahl abbildet, verwendet werden. Eine solche Funktion wird als *zweidimensionale Kostenausgleichsheuristik* bezeichnet.
Als Beipiel für eine solche Kostenausgleichsheuristik nehme man die Funktion, die die Einzelkosten mit einem Gewichtungsfaktor multipliziert und die Resultate addiert (oder multipliziert). Die Frage, welche Gewichtungsfaktoren man günstigerweise nimmt, also wie stark man die Kosten, in eine neue Situation zu gelangen, mit den Kosten verrechnen sollte, in einer neuen Situation eine Messung durchzuführen, hängt sehr von den Anwendungen und der vorgenommenen Modellierung ab. Der konkrete Vorteil einer bestimmten Kostenausgleichsheuristik für eine praktische Anwendung läßt sich wie bei einer Kosten-Nutzen-Heuristik nur empirisch, aber nicht mathematisch belegen. Es ist auch nicht Gegenstand der Erfindung, eine bestimmte Kostenausgleichsheuristik zu verwenden. Es besteht vielmehr der Anspruch, daß jede vom Modellierer gewählte Funktion in das Maßnahmenkonzept eingebaut werden kann. Der entscheidende Vorteil besteht in der freien Wählbarkeit der Kostenausgleichsheuristik, weil für verschiedene Anwendungen jeweils unterschiedliche Heuristiken die günstigsten sein können.
Eine weitere Frage, die die Verfahren aus den Ansprüchen 22 und 24 aufwerfen, ist die, welche Zielsituationen überhaupt als mögliche Kandidaten betrachtet werden sollen. Hierfür kann man als vorteilhafte Ausgestaltung eine Kandidatengenerierungsheuristik nehmen, die ausgehend von der Ausgangssituation "leicht erreichbare" Situationen, die sogenannten Nachfolgesituationen berechnet (Ansprüche 23 und 25). Als Beispiel, wie man leicht erreichbare Situationen vernünftig definieren und effizient berechnen kann, sei auf das Konzept der Kandidatengenerierung verwiesen, das in <TATAR, Mugur / IWANOWSKI, Sebastian: Efficient Candidate Generation in a Model-Based Diagnostic Engine, Technical Report F3S-95-003, Daimler-Benz Research Berlin (Germany) 1995> vorgestellt wurde. Dort wurde das Konzept anhand von Diagnosekandidaten demonstriert. Es können jedoch anstelle der Diagnosekandidaten genausogut Situationen verwendet werden. In einem späteren Abschnitt dieser Patentschrift werden die wesentlichen Eigenschaften des Verfahrens von <TATAR, Mugur / IWANOWSKI, Sebastian: Efficient Candidate Generation in a Model-Based Diagnostic Engine, Technical Report F3S-95-003, Daimler-Benz Research Berlin (Germany) 1995> und seine analoge Übertragung auf Situationen näher beschrieben.

## Patentansprüche

1. Verfahren zur automatischen Lösung einer Simulations- und/oder Diagnoseaufgabe für ein technisches System,
das mindestens zwei Komponenten mit jeweils mindestens einem Parameter umfaßt,
wobei für die Lösung eine Inferenzmaschine und ein komponentenorientiertes Systemmodell,
das automatisch unter Verwendung mindestens eines Komponententyp-Modells erzeugt wird,
verwendet werden,
**dadurch gekennzeichnet,**
**daß** das Komponententyp-Modell mindestens eine lokale Maßnahme mit einer lokalen Maßnahmenvoraussetzung umfaßt,
wobei bei einer lokalen Maßnahme der durch die Maßnahme ermittelte oder auf einen Wert eingestellte Parameter und die Parameter der Maßnahmenvoraussetzung alle zu derselben Komponente des technischen Systems gehören,
und **daß** mindestens einmal die Gültigkeit der Maßnahme in einem vorgegebenen Wertekontext, das ist die Belegung beliebiger Parameter des Systemmodells mit Werten, bestimmt wird,
indem die Werte des Wertekontextes mit Hilfe der Inferenzmaschine durch das Systemmodell bis hin zu den Parametern der Maßnahmenvoraussetzung propagiert werden.

2. Verfahren nach Anspruch 1,
**dadurch gekennzeichnet, daß**
beim Wissenserwerb beliebige Maßnahmen mit ihren globalen Abhängigkeiten automatisch erfaßt werden,
indem lokale Maßnahmen für Komponententypen definiert werden
und bei der Erzeugung des Systemmodells eine Verbindungsliste automatisch ausgewertet wird,
die für mindestens ein Paar von zwei benachbarten Komponenten K1, K2 die Information umfaßt,
welche Parameter an der Komponente K1 mit welchen Parametern an der Komponente K2 verbunden sind,
und bei der Auswertung für jede in der Verbindungsliste enthaltene Information, daß ein Parameter p1 an der Komponente K1 mit einem Parameter p2 an der Komponente p2 verbunden ist,
eine der folgenden beiden Verfahrensschritte durchgeführt wird:
a) Die Parameter p1 und p2 werden durch eine eindeutige Kopie p ersetzt, wobei p in jeder Maßnahme, die für p1 oder p2 definiert ist, anstelle von p1 bzw. p2 eingesetzt wird, ebenso in jeder Menge von für die Maßnahme vorausgesetzten Werten.
b) Es wird dem Systemmodell ein in jedem Fall zu erfüllender Constraint hinzugefügt, der verlangt, daß die Werte von p1 und p2 gleich sind.

3. Verfahren nach Anspruch 1,
**dadurch gekennzeichnet, daß**
ein Reasoning Maintenance System verwendet wird
und die Gültigkeit einer Maßnahme in Abhängigkeit von verschiedenen vorgegebenen Wertekontexten berechnet wird,
wobei die Abhängigkeit der durch das System propagierten Parameterwerte von den verschiedenen Wertekontexten durch das Reasoning Maintenance System verwaltet wird.

4. Verfahren nach Anspruch 1,
**dadurch gekennzeichnet, daß**
während der Lösung der Aufgabe mindestens einmal die Meßbarkeit oder Zugänglichkeit eines Parameters p in Abhängigkeit von einem vorgegebenen Wertekontext bestimmt wird, wobei die Werte des Wertekontextes sich auf beliebige Parameter des Systems beziehen, indem die Meßbarkeit oder Zugänglichkeit des Parameters p in Abhängigkeit von vorausgesetzten Werten an Systemparametern,
die im Systemmbdell dem Parameter p benachbart sind,
durch die Definition einer lokalen Maßnahme festgelegt wird,
und die Meßbarkeit oder Zugänglichkeit des Parameters p bestimmt wird, indem die Gültigkeit der lokalen Maßnahme beim Wertekontext bestimmt wird.

5. Verfahren nach Anspruch 4,
**dadurch gekennzeichnet, daß**
die Meßbarkeit oder Zugänglichkeit des Parameters p von einer logischen Disjunktion von Wertekontexten bezüglich p benachbarter Parameter abhängt
und für jeden dieser Wertekontexte eine eigene lokale Maßnahme definiert wird.

6. Verfahren nach Anspruch 1,
**dadurch gekennzeichnet, daß**
während der Lösung der Aufgabe mindestens einmal die Meß- oder Zugänglichkeitskosten eines Parameters p in Abhängigkeit von einem vorgegebenen Wertekontext bestimmt werden,
wobei die Werte des Wertekontextes sich auf beliebige Parameter des Systems beziehen,
indem die Meß- oder Zugänglichkeitskosten des Parameters p in Abhängigkeit von vorausgesetzten Werten an Systemparametern,
die im Systemmodell dem Parameter p benachbart sind,
durch die Definition einer bewerteten lokale Maßnahme festgelegt sind,
und die Meß- oder Zugänglichkeitskosten des Parameters p bestimmt werden,
indem die Gültigkeit der lokalen Maßnahme beim Wertekontext bestimmt wird und dann, wenn die lokale Maßnahme beim Wertekontext gültig ist, die Meß- oder Zugänglichkeitskosten des Parameters p die Kosten dieser Maßnahme sind.

7. Verfahren nach Anspruch 6,
**dadurch gekennzeichnet, daß**
dann,
wenn die Meß- oder Zugänglichkeitskosten des Parameters p von einer logischen Disjunktion von Wertekontexten von bezüglich p benachbarter Parameter abhängen,
wobei die Kosten für jeden Wertekontext unterschiedlich sein dürfen,
für jeden dieser Wertekontexte eine bewertete lokale Maßnahme definiert wird.

8. Verfahren nach Anspruch 6,
**dadurch gekennzeichnet, daß**
ein Kosten-Nutzen-Verhältnis für einen Parameter p in Abhängigkeit von einem vorgegebenen Wertekontext berechnet wird,
wobei die Werte des Wertekontextes sich auf beliebige Parameter des Systems beziehen,
wobei eine Kosten-Nutzen-Heuristik vorgegeben ist, das ist eine Funktion, die zwei Zahlen auf eine Zahl abbildet,
und indem aus den nach einem Verfahren nach Anspruch 6 bestimmten Meß- oder Zugänglichkeitskosten des Parameters p und einem Nutzwert, der unabhängig von den Kosten ausgerechnet wird,
mit der Kosten-Nutzen-Heuristik das Kosten-Nutzen-Verhältnis bestimmt wird.

9. Verfahren nach Anspruch 6,
**dadurch gekennzeichnet, daß**
aus einer Menge von vorgegebenen Wertekontexten, wobei die Werte des Wertekontextes sich auf beliebige Parameter des Systems beziehen,
und einer vorgegebenen Menge von Parametern des technischen Systems
der Wertekontext gefunden wird, aus dem der Parameter resultiert, der die geringsten Meßoder Zugänglichkeitskosten hat,
indem für jeden vorgegebenen Wertekontext S und jeden vorgegebenen Parameter p durch Anwendung des Verfahrens nach Anspruch 6 die Meß- oder Zugänglichkeitskosten von p in Abhängigkeit von S berechnet werden,
dadurch für den Wertekontext S der Parameter p(S) bestimmt wird, der die geringsten Meßoder Zugänglichkeitskosten in Abhängigkeit von S hat,
und dadurch der Wertekontext S ermittelt wird, für den die Meß- oder Zugänglichkeitskosten von p(S) minimal sind.

10. Verfahren nach Anspruch 9,
**dadurch gekennzeichnet, daß**
als Wertekontexte Situationen vorgegeben werden,
wobei eine Situation ein Wertekontext ist, durch den alle freien Eingabeparameter mit Werten belegt werden,
und unter den vorgegebenen Situationen die Situation gefunden wird, aus dem der vorgegebene Parameter resultiert, der die geringsten Meß- oder Zugänglichkeitskosten hat.

11. Verfahren nach Anspruch 8,
**dadurch gekennzeichnet, daß**
aus einer Menge von vorgegebenen Wertekontexten, wobei die Werte des Wertekontextes sich auf beliebige Parameter des Systems beziehen,
und einer vorgegebenen Menge von Parametern des technischen Systems
und einer Kosten-Nutzen-Heuristik
der Wertekontext gefunden wird, aus dem der Parameter resultiert, der das beste Kosten-Nutzen-Verhältnis hat,
indem für jeden vorgegebenen Wertekontext S und jeden vorgegebenen Parameter p durch Anwendung des Verfahrens nach Anspruch 8 das Kosten-Nutzen-Verhältnis von p in Abhängigkeit von S berechnet wird,
dadurch für den Wertekontext S der Parameter p(S) bestimmt wird, der das beste Kosten-Nutzen-Verhältnis in Abhängigkeit von S hat,
und dadurch der Wertekontext S ermittelt wird, für den das Kosten-Nutzen-Verhältnis von p(S) optimal ist.

12. Verfahren nach Anspruch 11,
**dadurch gekennzeichnet, daß**
die vorgegebenen Wertekontexte Situationen sind,
wobei eine Situation ein Wertekontext ist, durch den alle freien Eingabeparameter mit Werten belegt werden,
und unter den vorgegebenen Situationen die Situation gefunden wird, aus dem der vorgegebene Parameter resultiert, der das beste Kosten-Nutzen-Verhältnis hat.

13. Verfahren nach Anspruch 1,
**dadurch gekennzeichnet, daß**
während der Lösung der Aufgabe mindestens einmal die Möglichkeit, ob ein Wert an einem Parameter p in Abhängigkeit von einem vorgegebenen Wertekontext auftreten kann, bestimmt wird,
wobei die Werte des Wertekontextes sich auf beliebige Parameter des Systems beziehen, indem die Möglichkeit, ob ein Wert am Parameter p in Abhängigkeit von vorausgesetzten Werten an Systemparametern,
die im Systemmodell dem Parameter p benachbart sind,
auftreten kann,
durch die Definition einer lokalen Wertbelegungsmaßnahme festgelegt wird
und die Gültigkeit der lokalen Maßnahme beim Wertekontext ermittelt wird.

14. Verfahren nach Anspruch 13,
**dadurch gekennzeichnet, daß**
die Möglichkeit, ob ein Wert am Parameter p auftreten kann, von einer logischen Disjunktion von Wertekontexten bezüglich p benachbarter Parameter abhängt
und für jeden dieser Wertekontexte eine eigene lokale Wertbelegungsmaßnahme definiert wird.

15. Verwendung des Verfahren nach Anspruch 13 für eine Sicherheitsanalyse des technischen Systems,
**dadurch gekennzeichnet, daß**
für jeden Parameter p des technischen Systems und für alle seine kritischen Werte Wertebelegungsmaßnahmen definiert sind,
eine Menge von Wertekontexten vorgegeben wird
und für jeden Wertekontext und jeden Parameter p durch Anwendung des Verfahrens nach Anspruch 13 bestimmt wird, ob kritische Werte für p auftreten können.

16. Verfahren nach Anspruch 1,
**dadurch gekennzeichnet, daß**
während der Lösung der Aufgabe mindestens einmal die Möglichkeit, einen Wert am Parameter p in Abhängigkeit von einem vorgegebenen Wertekontext einzustellen, bestimmt wird,
wobei die Werte des Wertekontextes sich auf beliebige Parameter des Systems beziehen, indem die Einstellbarkeit des Wertes an dem Parameter p in Abhängigkeit von vorausgesetzten Werten an Systemparametern,
die im Systemmodell dem Parameter p benachbart sind,
durch die Definition einer lokalen Wertbelegungsmaßnahme festgelegt wird
und die Gültigkeit der lokalen Maßnahme beim Wertekontext ermittelt wird.

17. Verfahren nach Anspruch 16,
**dadurch gekennzeichnet, daß**
die Einstellbarkeit des Wertes an dem Parameter p von einer logischen Disjunktion von Wertekontexten bezüglich p benachbarter Parameter abhängt
und für jeden dieser Wertekontexte eine eigene lokale Wertbelegungsmaßnahme definiert wird.

18. Verfahren nach Anspruch 1,
**dadurch gekennzeichnet, daß**
während der Lösung der Aufgabe mindestens einmal Einstellkosten eines Wertes an einem Parameter p in Abhängigkeit von einem vorgegebenen Wertekontext berechnet wird,
wobei die Werte des Wertekontextes sich auf beliebige Parameter des Systems beziehen,
indem die Einstellkosten des Wertes an dem Parameter p in Abhängigkeit von vorausgesetzten Werten an Systemparametern,
die im Systemmodell dem Parameter p benachbart sind,
durch die Definition einer bewerteten lokalen Wertbelegungsmaßnahme festgelegt werden, die Gültigkeit der lokalen Maßnahme beim Wertekontext ermittelt wird.
und dann, wenn die lokale Maßnahme beim Wertekontext gültig ist, die Einstellkosten des Wertes am Parameters p in diesem Wertekontext die Kosten dieser Wertbelegungsmaßnahme sind.

19. Verfahren nach Anspruch 18,
**dadurch gekennzeichnet, daß**
dann,
wenn die Einstellkosten des Wertes von einer logischen Disjunktion von Wertekontexten von bezüglich p benachbarter Parameter abhängen,
wobei die Kosten für jeden Wertekontext unterschiedlich sein dürfen,
für jeden dieser Wertekontexte eine bewertete lokale Wertbelegungsmaßnahme definiert wird.

20. Verfahren nach Anspruch 18,
**dadurch gekennzeichnet, daß**
während der Lösung der Aufgabe mindestens einmal aus einer vorgegebenen
Ausgangssituation die Einstellkosten einer vorgegebenen Zielsituation berechnet werden,
wobei eine Situation ein Wertekontext ist, durch den alle freien Eingabeparameter mit Werten belegt werden,
und für jeden freien Inputparameter p des Systems die Einstellkosten für den Wert, den der Parameter p in der Zielsituation Z hat, in Abhängigkeit von der Ausgangssituation A durch Anwendung eines Verfahrens nach Anspruch 19 berechnet werden
und aus dem daraus resultierenden Kostenvektor über alle freien Inputparameter durch eine beliebige Vektornorm die Einstellkosten der Zielsituation von Z bestimmt werden.

21. Verfahren nach Anspruch 20,
**dadurch gekennzeichnet, daß**
die Vektornorm das Maximum, das Produkt oder die Addition ist.

22. Verfahren nach einem der Ansprüche 6 oder 20,
**dadurch gekennzeichnet, daß**
während der Lösung der Aufgabe mindestens einmal aus einer vorgegebenen Ausgangssituation und einer vorgegebenen Menge von Zielsituationen die Zielsituation gefunden wird,
aus der der Parameter resultiert, der die geringsten Meß- oder Zugänglichkeitskosten in der Zielsituation hat, wenn das technische System sich in der Ausgangssituation befindet,
wobei eine zweidimensionale Kostenausgleichsheuristik vorgegeben ist, das ist eine Funktion, die zwei Zahlen auf eine neue Zahl abbildet,
und für jede vorgegebene Zielsituation Z und jeden Parameter p
• die Einstellkosten aus der Ausgangssituation gemäß einem Verfahren nach Anspruch 20 berechnet werden,
• dann die Meß- oder Zugänglichkeitskosten des Parameters p in Abhängigkeit von der Zielsituation Z gemäß einem Verfahren nach Anspruch 6 berechnet werden
• und dann die Gesamtkosten der Meß- oder Zugänglichkeit des Parameters p in der Zielsituation Z, wenn sich das technische System in der Ausgangssituation A befindet, bestimmt werden,
wobei die Gesamtkosten mit der zweidimensionale Kostenausgleichsheuristik bestimmt werden,
und schließlich diejenige Zielsituation Z ermittelt wird, aus der der Parameter resultiert, der die geringsten unter den eben errechneten Gesamtkosten hat.

23. Verfahren nach Anspruch 22,
**dadurch gekennzeichnet, daß**
die Menge von Zielsituationen bestimmt wird,
indem ein vorgegebenes Kandidatengenerierungsverfahren, das auf einer Ordnungsrelation zwischen den Situationen beruht, verwendet wird, um Nachfolgersituationen zu berechnen,
und als Menge von Zielsituationen die Ausgangssituation und die durch das Kandidatengenerierungsverfahren berechneten Nachfolgersituationen verwendet werden.

24. Verfahren nach einem der Ansprüche 8 oder 20,
**dadurch gekennzeichnet, daß**
während der Lösung der Aufgabe mindestens einmal aus einer vorgegebenen Ausgangssituation und einer vorgegebenen Menge von Zielsituationen die Zielsituation gefunden wird,
aus der der Parameter resultiert, der das beste Kosten-Nutzen-Verhältnis in der Zielsituation hat, wenn das technische System sich in der Ausgangssituation befindet,
wobei eine zweidimensionale Kostenausgleichsheuristik, das ist eine Funktion, die zwei Zahlen auf eine neue Zahl abbildet,
und eine Kosten-Nutzen-Heuristik, das ist eine Funktion, die zwei Zahlen auf eine Zahl abbildet, vorgegeben sind,
und wobei für jede vorgegebene Zielsituation Z
- die Einstellkosten der Zielsituation Z aus der Ausgangssituation gemäß einem Verfahren nach Anspruch 20 berechnet werden,
- dann für jeden Parameter p
- das Kosten-Nutzen-Verhältnis des Parameters p in Abhängigkeit von der Zielsituation Z,
wenn das technische System sich in der Ausgangssituation befindet,
bzgl. der vorgegebenen Kosten-Nutzen-Heuristik gemäß einem Verfahren nach Anspruch 8 berechnet wird,
wobei die Zielsituation Z der vorgegebene Wertekontext ist,
- die Gesamtbewertung des Parameters p mit der vorgegebenen Kostenausgleichsheuristik bestimmt wird,
wobei als Kosten
- die Einstellkosten der Zielsituation Z aus der Ausgangssituation
- und das Kosten-Nutzen-Verhältnis des Parameters p
verwendet werden,
und schließlich die Zielsituation ermittelt wird, aus der der Parameter resultiert, der die optimale unter den eben errechneten Gesamtbewertungen hat.

25. Verfahren nach Anspruch 24,
**dadurch gekennzeichnet, daß**
die Menge von Zielsituationen bestimmt wird,
indem ein vorgegebenes Kandidatengenerierungsverfahren, das auf einer Ordnungsrelation zwischen den Situationen beruht, verwendet wird, um Nachfolgersituationen zu berechnen,
und als Menge von Zielsituationen die Ausgangssituation und die durch das Kandidatengenerierungsverfahren berechneten Nachfolgersituationen verwendet werden.

26. Verfahren nach einem der Ansprüche 4 bis 14 oder 16 bis 25 und nach Anspruch 3,
**dadurch gekennzeichnet,**
**daß** ein Verfahren nach einem der Ansprüche 4 bis 14 oder 16 bis 25 angewendet wird
und dabei gleichzeitig mehrere Wertekontexte gemäß dem Verfahren nach Anspruch 3 propagiert werden.

27. Verfahren nach Anspruch 2 und nach einem der Ansprüche 4 bis 14 oder 16 bis 25,
**dadurch gekennzeichnet,**
**daß** zuerst ein Verfahren nach Anspruch 2 angewendet wird, um eine globale in eine lokale Maßnahme zu überführen,
und anschließend einer der Ansprüche 4 bis 14 oder 16 bis 25 angewendet wird.

## Claims

1. Method for automatically solving a simulation and/or diagnosis task for a technical system which comprises at least two components with in each case at least one parameter, use being made for the purpose of the solution of an inference machine and a component-oriented system model which is generated automatically by using at least one component-type model, **characterized in that** the component-type model comprises at least one local measure with a local measure assumption, the parameter determined by the measure or set to a value, and the parameters of the measure assumption all belonging in the case of a local measure to the same component of the technical system, and **in that** at least once the validity of the measure in a prescribed value context, that is the occupancy of arbitrary parameters of the system model by values, is determined by virtue of the fact that the values of the value context are propagated by the system model with the aid of the inference machine up to the parameters of the measure assumption.

2. Method according to Claim 1, **characterized in that** arbitrary measures with their global dependencies are automatically detected during knowledge acquisition, by virtue of the fact that local measures are defined for component types and a connection list which contains the information for at least one pair of two adjacent components K1, K2 is utilized automatically during the generation of the system model, as to which parameters at the component K1 are connected to which parameters at the component K2, and one of the following two method steps is carried out in the utilization for each item of information contained in the connection list that a parameter p1 at the component K1 is connected to a parameter p2 at the component K2:
a) The parameters p1 and p2 are replaced by a unique copy p, p being used instead of p1 or p2, respectively, in each measure which is defined for p1 or p2, likewise in each set of values assumed for the measure.
b) A constraint which is to be fulfilled in each case and which requires that the values of p1 and p2 are equal is added to the system model.

3. Method according to Claim 1, **characterized in that** a Reasoning Maintenance System is used, and the validity of a measure is calculated as a function of different prescribed value contexts, the dependence of the parameter values, propagated by the system, on the different value contexts being managed by the Reasoning Maintenance System.

4. Method according to Claim 1, **characterized in that** during the solution of the task the measurability or accessibility of a parameter p is determined at least once as a function of a prescribed value context, the values of the value context relating to arbitrary parameters of the system, by virtue of the fact that the measurability or accessibility of the parameter p is determined by the definition of a local measure as a function of assumed values of system parameters which are adjacent to the parameter p in the system model, and the measurability or accessibility of the parameter p is determined by determining the validity of the local measure in the case of the value context.

5. Method according to Claim 4, **characterized in that** the measurability or accessibility of the parameter p is a function of a logic disjunction of value contexts with reference to p adjacent parameters, and a dedicated local measure is defined for each of these value contexts.

6. Method according to Claim 1, **characterized in that** during the solution of the task the measuring or accessibility costs of a parameter p are determined at least once as a function of a prescribed value context, the values of the value context relating to arbitrary parameters of the system, by virtue of the fact that the measuring or accessibility costs of the parameter p are determined by the definition of a weighted local measure as a function of assumed values of system parameters which are adjacent to the parameter p in the system model, and the measuring or accessibility costs of the parameter p are determined by determining the validity of the local measure in the case of the value context, and whenever the local measure is valid in the case of the value context the measuring or accessibility costs of the parameter p are the costs of this measure.

7. Method according to Claim 6, **characterized in that** when the measuring or accessibility costs of the parameter p are a function of a logic disjunction of value contexts of parameters adjacent to p, the costs for each value context being permitted to be different, a weighted local measure is defined for each of these value contexts.

8. Method according to Claim 6, **characterized in that** a cost-benefit ratio is calculated for a parameter p as a function of a prescribed value context, the values of the value context relating to arbitrary parameters of the system, a cost-benefit heuristics being provided, which is a function which maps two numbers onto one number, and by virtue of the fact that the cost-benefit ratio is determined with the aid of the cost-benefit heuristics from the measuring or accessibility costs of the parameter p, determined using a method according to Claim 6, and a useful value which is calculated independently of the costs.

9. Method according to Claim 6, **characterized in that** a set of prescribed value contexts, the values of the value context relating to arbitrary parameters of the system, and a prescribed set of parameters of the technical system are used to find the value context resulting in the parameter which has the lowest measuring or accessibility costs, by virtue of the fact that for each prescribed value context S and each prescribed parameter p the method according to Claim 6 is applied to calculate the measuring or accessibility costs of p as a function of S, the parameter p(S) which has the lowest measuring or accessibility costs as a function of the value context S thereby being determined for S as a function of S, and the value context S for which the measuring or accessibility costs of p(S) are minimal thereby being determined.

10. Method according to Claim 9, **characterized in that** situations are prescribed as value contexts, a situation being a value context by means of which all the free input parameters are occupied by values, and, among the prescribed situations the situation is found from which there results the prescribed parameter which has the lowest measuring or accessibility costs.

11. Method according to Claim 8, **characterized in that** a set of prescribed value contexts, the values of the value context relating to arbitrary parameters of the system, and a prescribed set of parameters of the technical system and a cost-benefit heuristics are used to find the value context resulting in the parameter which has the best cost-benefit ratio, by virtue of the fact that for each prescribed value context S and each prescribed parameter p the method according to Claim 8 is applied to calculate the cost-benefit ratio of p as a function of S, the parameter p(S) which has the best cost-benefit ratio as a function of the value context S thereby being determined for S as a function of S, and the value context S for which the cost-benefit ratio of p(S) is optimal thereby being determined.

12. Method according to Claim 11, **characterized in that** the prescribed value contexts are situations, a situation being a value context by means of which all the free input parameters are occupied by values, and, among the prescribed situations the situation is found from which there results the prescribed parameter which has the best cost-benefit ratio.

13. Method according to Claim 1, **characterized in that** during the solution of the task the possibility as to whether a value can occur at a parameter p as a function of a prescribed value context is determined at least once, the values of the value context relating to arbitrary parameters of the system, by virtue of the fact that the possibility as to whether a value can occur at the parameter p as a function of assumed values of system parameters which are adjacent to the parameter p in the system model is determined by the definition of a local value occupancy measure, and the validity of the local measure in the case of the value context is determined.

14. Method according to Claim 13, **characterized in that** the possibility as to whether a value can occur at the parameter p is a function of a logic disjunction of value contexts with reference to p adjacent parameters, and a dedicated local value occupancy measure is defined for each of these value contexts.

15. Use of the method according to Claim 13 for a safety analysis of the technical system, **characterized in that** value occupancy measures are defined for each parameter p of the technical system and for all its critical values, a set of value contexts is prescribed, and it is determined whether critical values can occur for p for each value context and each parameter p by applying the method according to Claim 13.

16. Method according to Claim 1, **characterized in that** during the solution of the task the possibility of setting a value at the parameter p as a function of a prescribed value context is determined at least once, the values of the value context relating to arbitrary parameters of the system, by virtue of the fact that the settability of the value at the parameter p is determined as function of assumed values of system parameters which are adjacent to the parameter p in the system model by the definition of a local value occupancy measure, and the validity of the local measure in the case of the value context is determined.

17. Method according to Claim 16, **characterized in that** the settability of the value at the parameter p is a function of a logic disjunction of value contexts with reference to p adjacent parameters, and a dedicated local value occupancy measure is defined for each of these value contexts.

18. Method according to Claim 1, **characterized in that** during the solution of the task setting costs of a value at a parameter p are calculated at least once as a function of a prescribed value context, the values of the value context relating to arbitrary parameters of the system, by virtue of the fact that the setting costs of the value at the parameter p are determined as a function of assumed values of system parameters which are adjacent to the parameter p in the system model by the definition of a weighted local value occupancy measure, the validity of the local measure is determined in the case of the value context, and whenever the local measure is valid in the case of the value context the setting costs of the value at the parameter p in this value context are the costs of this value occupancy measure.

19. Method according to Claim 18, **characterized in that** whenever the setting costs of the value are a function of a logic disjunction of value contexts of parameters adjacent to p, the costs for each value context being permitted to be different, a weighted local value occupancy measure is defined for each of these value contexts.

20. Method according to Claim 18, **characterized in that** during the solution of the task the setting costs of a prescribed target situation are calculated at least once from a prescribed initial situation, a situation being a value context by means of which all the free input parameters are occupied by values, and for each free input parameter p of the system the setting costs for the value which the parameter p has in the target situation Z are calculated as a function of the initial situation A by applying the method according to Claim 19, and the setting costs of the target situation of Z are determined by means of an arbitrary vector norm from the cost vector, resulting therefrom, over all the free input parameters.

21. Method according to Claim 20, **characterized in that** the vector norm is the maximum, the product or the addition.

22. Method according to one of Claims 6 or 20,
**characterized in that** during the solution of the task there is found at least once from a prescribed initial situation and a prescribed set of target situations the target situation from which the parameter results which has the lowest measuring or accessibility costs in the target situation when the technical system is in the initial situation, a two-dimensional cost-equalizing heuristics being prescribed which is a function which maps two numbers onto one new number, and for each prescribed target situation Z and each parameter p
• the setting costs are calculated from the initial situation in accordance with a method according to Claim 20,
• the measuring or accessibility costs of the parameter p are then calculated as a function of the target situation Z in accordance with a method according to Claim 6,
• and then the total costs of the measuring or accessibility of the parameter p in the target situation Z when the technical system is in the initial situation A are determined,
the total costs being determined with the aid of the two-dimensional cost-equalizing heuristics,
and, finally, that target situation Z is determined from which the parameter results which has the lowest among the total costs just calculated.

23. Method according to Claim 22, **characterized in that** the set of target situations is determined by virtue of the fact that a prescribed candidate-generating method which is based on an ordering relationship between the situations is used in order to calculate successor situations, and the initial situation and the successor situations calculated by the candidate-generating method are used as the set of target situations.

24. Method according to one of Claims 8 or 20, **characterized in that** during the solution of the task there is found at least once from a prescribed initial situation and a prescribed set of target situations the target situation from which the parameter results which has the best cost-benefit ratio in the target situation when the technical system is in the initial situation, a two-dimensional cost-equalizing heuristics which is a function which maps two numbers onto one new number, and a cost-benefit heuristics which is a function which maps two numbers onto one number being provided, and for each prescribed target situation Z
- the setting costs of the target situation Z being calculated from the initial situation in accordance with the method according to Claim 20,
- then, for each parameter p,
- the cost-benefit ratio of the parameter p being calculated as a function of the target situation Z, when the technical system is in the initial position, with reference to the prescribed cost-benefit heuristics in accordance with the method according to Claim 8, the target situation Z being the prescribed value context,
- the total weighting of the parameter p being determined with the aid of the prescribed cost-equalizing heuristics,
use being made as costs of
- the setting costs of the target situation Z from the initial situation,
- and the cost-benefit ratio of the parameter p,
and, finally, that target situation Z being determined from which the parameter results which has the optimum among the total weightings just calculated.

25. Method according to Claim 24, **characterized in that** the set of target situations is determined by virtue of the fact that a prescribed candidate-generating method which is based on an ordering relationship between the situations is used in order to calculate successor situations, and the initial situation and the successor situations calculated by the candidate-generating method are used as the set of target situations.

26. Method according to one of Claims 4 to 14 or 16 to 25 and according to Claim 3, **characterized in that** a method according to one of Claims 4 to 14 or 16 to 25 is applied, and in this case a plurality of value contexts are propagated simultaneously in accordance with the method according to Claim 3.

27. Method according to Claim 2 and according to one of Claims 4 to 14 or 16 to 25, **characterized in that** firstly a method according to Claim 2 is applied in order to transform a global measure into a local one and, finally, one of Claims 4 to 14 or 16 to 25 is applied.

## Revendications

1. Procédé de résolution automatique d'un problème de simulation et/ou de diagnostic pour un système technique, qui comprend au moins deux composants avec respectivement au moins un paramètre, où l'on utilise pour la résolution une machine d'inférence et un modèle de système orienté sur les composants, qui est produit automatiquement en utilisant au moins un modèle de type de composant,
**caractérisé en ce que** le modèle de type de composant comprend au moins une mesure locale avec une hypothèse de mesure locale, où, dans une mesure locale, le paramètre déterminé par la mesure ou ajusté à une valeur et les paramètres de l'hypothèse de mesure appartiennent tous au même composant du système technique, et
**en ce qu'**on détermine au moins une fois la validité de la mesure dans un contexte de valeurs prédéterminé, qui est l'adoption des paramètres quelconques du modèle de système par des valeurs, en propageant les valeurs du contexte de valeurs au moyen de la machine d'inférence à travers le modèle de système jusqu'aux paramètres de l'hypothèse de mesure.

2. Procédé selon la revendication 1, **caractérisé en ce que**, lors de l'acquisition de connaissances, on saisit automatiquement des mesures quelconques avec leurs dépendances globales en définissant des mesures locales pour les types de composants et, lors de la production du modèle de système, on évalue automatiquement une liste de relations, qui comprend, pour au moins une paire de deux composants voisins K1, K2, les informations montrant quels paramètres du composant K1 sont liés à quels paramètres du composant K2, et
**en ce que**, lors de l'évaluation, pour chaque information contenue dans la liste de relations montrant qu'un paramètre p1 est lié au composant K1 avec un paramètre p2 au composant K2, on effectue une des deux étapes de procédé suivantes:
a) les paramètres p1 et p2 sont remplacés par une copie univoque p, où l'on utilise p dans chaque mesure, qui est définie pour p1 ou p2, en lieu et place de p1 ou selon le cas p2, de même que dans chaque ensemble de valeurs présumées pour la mesure, et
b) on ajoute au modèle de système une contrainte à satisfaire dans chaque cas, qui exige que les valeurs de p1 et p2 soient égales.

3. Procédé selon la revendication 1, **caractérisé en ce que** l'on utilise un Reasoning Maintenance System et on évalue la validité d'une mesure en fonction de divers contextes de valeurs prédéterminés, la dépendance des valeurs paramétriques, propagées à travers le système, des divers contextes de valeurs étant gérée par le Reasoning Maintenance System.

4. Procédé selon la revendication 1, **caractérisé en ce que**, au cours de la résolution du problème, on détermine au moins une fois la mesurabilité ou l'accessibilité d'un paramètre p en fonction d'un contexte de valeurs prédéterminé, où les valeurs du contexte de valeurs se rapportent à des paramètres quelconques du système, en établissant par la définition d'une mesure locale la mesurabilité ou l'accessibilité du paramètre p en fonction de valeurs présumées des paramètres du système qui sont voisins du paramètre p dans le modèle de système, et **en ce qu'**on détermine la mesurabilité ou l'accessibilité du paramètre p en déterminant la validité de la mesure locale dans le contexte de valeurs.

5. Procédé selon la revendication 4, **caractérisé en ce que** la mesurabilité ou l'accessibilité du paramètre p dépend d'une disjonction logique de contextes de valeurs de paramètres voisins par rapport à p, et **en ce qu'**on définit une mesure locale propre pour chacun de ces contextes de valeurs.

6. Procédé selon la revendication 1, **caractérisé en ce que**, lors de la résolution du problème, on détermine au moins une fois les coûts de mesurabilité ou d'accessibilité d'un paramètre p en fonction d'un contexte de valeurs prédéterminé, où les valeurs du contexte de valeurs se rapportent à des paramètres quelconques du système, en établissant par la définition d'une mesure locale évaluée les coûts de mesurabilité ou d'accessibilité du paramètre p en fonction de valeurs présumées des paramètres du système, qui sont voisins du paramètre p dans le modèle de système, et on détermine les coûts de mesurabilité ou d'accessibilité du paramètre p en déterminant la validité de la mesure locale dans le contexte de valeurs, puis, si la mesure locale est valide dans le contexte de valeurs, les coûts de mesurabilité ou d'accessibilité du paramètre p sont les coûts de cette mesure.

7. Procédé selon la revendication 6, **caractérisé en ce que**, lorsque les coûts de mesurabilité ou d'accessibilité du paramètre p dépendent d'une disjonction logique de contextes de valeurs de paramètres voisins par rapport à p, où les coûts peuvent être différents pour chaque contexte de valeurs, on définit pour chacun de ces contextes de valeur une mesure locale évaluée.

8. Procédé selon la revendication 6, **caractérisé en ce que** lorsqu'un rapport coût/performances est calculé pour un paramètre p en fonction d'un contexte de valeurs prédéterminé, où les valeurs du contexte de valeurs se rapportent à des paramètres quelconques du système, et où est prédéterminé un système heuristique coût/performances qui est une fonction qui représente deux chiffres par un chiffre, et en déterminant à partir des coûts de mesurabilité ou d'accessibilité du paramètre p déterminés par un procédé selon la revendication 6 et d'une valeur utile, qui est calculée indépendamment des coûts, le rapport coût/performances au moyen du système heuristique coût/performances.

9. Procédé selon la revendication 6, **caractérisé en ce que** l'on trouve, à partir d'un ensemble de contextes de valeurs prédéterminés, où les valeurs du contexte de valeurs se rapportent à des paramètres quelconques du système, et d'un ensemble prédéterminé de paramètres du système technique, le contexte de valeurs d'où ressort le paramètre qui a les coûts de mesurabilité ou d'accessibilité les plus faibles, en calculant, pour chaque contexte de valeurs prédéterminé S et chaque paramètre prédéterminé p, par utilisation du procédé selon la revendication 6, les coûts de mesurabilité et d'accessibilité de p en fonction de S, en déterminant ainsi pour le contexte de valeurs S le paramètre p(S) qui a les coûts de mesurabilité ou d'accessibilité les plus faibles en fonction de S et, par suite, on détermine le contexte de valeurs S pour lequel les coûts de mesurabilité ou d'accessibilité de p(S) sont minimaux.

10. Procédé selon la revendication 9, **caractérisé en ce qu'**on prédétermine comme contextes de valeurs des situations dans lesquelles une situation est un contexte de valeurs dans lequel tous les paramètres d'entrée libres sont occupés par des valeurs et on trouve, parmi les situations prédéterminées, la situation d'où ressort le paramètre prédéterminé qui a les coûts de mesurabilité ou d'accessibilité les plus faibles.

11. Procédé selon la revendication 8, **caractérisé en ce qu'**on trouve, à partir d'un ensemble de contextes de valeurs prédéterminés, où les valeurs du contexte de valeurs se rapportent à des paramètres quelconques du système, et d'un ensemble prédéterminé de paramètres du système technique et d'un système heuristique de coût/performances, le contexte de valeurs d'où ressort le paramètre qui a le meilleur rapport coût/performances, en calculant pour chaque contexte de valeurs prédéterminé S et chaque paramètre prédéterminé p par utilisation du procédé selon la revendication 8 le rapport coût/performances de p en fonction de S, on détermine ainsi pour le contexte de valeurs S le paramètre p(S) qui a le meilleur rapport coût/performances en fonction de S, et on détermine de la sorte le contexte de valeurs S pour lequel le rapport coût/performances de p(S) est optimal.

12. Procédé selon la revendication 11, **caractérisé en ce que** les contextes de valeurs prédéterminés sont des situations, dans lesquelles une situation est un contexte de valeurs dans lequel tous les paramètres d'entrée libres sont occupés par des valeurs et on trouve, parmi les situations prédéterminées, la situation d'où ressort le paramètre prédéterminé qui a le meilleur rapport coût/performances.

13. Procédé selon la revendication 1, **caractérisé en ce que**, lors de la résolution du problème, on détermine au moins une fois la possibilité qu'une valeur d'un paramètre p puisse apparaître en fonction d'un contexte de valeurs prédéterminé, où les valeurs du contexte de valeurs se rapportent à des paramètres quelconques du système, en établissant par la définition d'une mesure locale d'occupation de valeurs la possibilité qu'une valeur du paramètre p en fonction de valeurs supposées de paramètres du système, qui sont voisins des paramètres p dans le modèle de système, puisse apparaître et en déterminant la validité de la mesure locale dans le contexte de valeurs.

14. Procédé selon la revendication 13, **caractérisé en ce que** la possibilité qu'une valeur du paramètre p puisse apparaître dépend d'une disjonction logique de contextes de valeurs de paramètres voisins par rapport à p et on définit, pour chacun de ces contextes de valeurs, une mesure locale d'occupation de valeurs propre.

15. Utilisation du procédé selon la revendication 13 pour une analyse de sécurité du système technique, **caractérisé en ce que** l'on définit, pour chaque paramètre p du système technique et pour toutes ses valeurs critiques, des mesures d'occupation de valeurs, on prédétermine un ensemble de contextes de valeurs et, pour chaque contexte de valeurs et chaque paramètre p, on détermine par utilisation du procédé selon la revendication 13 si des valeurs critiques pour p peuvent apparaître.

16. Procédé selon la revendication 1, **caractérisé en ce que**, lors de la résolution du problème, on détermine au moins une fois la possibilité de régler une valeur du paramètre p en fonction d'un contexte de valeurs prédéterminé, où les valeurs du contexte de valeurs se rapportent à des paramètres quelconques du système, en établissant par la définition d'une mesure locale d'occupation de valeurs la capacité de réglage de la valeur du paramètre p en fonction des valeurs supposées des paramètres du système, qui sont voisins du paramètre p dans le modèle de système, et en déterminant la validité de la mesure locale dans le contexte de valeurs.

17. Procédé selon la revendication 16, **caractérisé en ce que** la capacité de réglage de la valeur du paramètre p dépend d'une disjonction logique de contextes de valeurs de paramètres voisins par rapport à p et on définit une mesure locale d'occupation de valeurs propre pour chacun de ces contextes de valeurs.

18. Procédé selon la revendication 1, **caractérisé en ce que**, lors de la résolution du problème, on calcule au moins une fois les coûts de réglage d'une valeur d'un paramètre p en fonction d'un contexte de valeurs prédéterminé, où les valeurs du contexte de valeurs se rapportent à des paramètres quelconques du système, en établissant, par la définition d'une mesure locale évaluée d'occupation de valeurs, les coûts de réglage de la valeur du paramètre p en fonction des valeurs supposées des paramètres du système, qui sont voisins du paramètre p dans le modèle du système, on détermine la validité de la mesure locale dans le contexte de valeurs et ensuite, si la mesure locale est valide dans le contexte de valeurs, les coûts de réglage de la valeur du paramètre p dans ce contexte de valeurs sont les coûts de cette mesure d'occupation de valeurs.

19. Procédé selon la revendication 18, **caractérisé en ce que**, si les coûts de réglage de la valeur dépendent d'une disjonction logique de contextes de valeurs de paramètres voisins par rapport à p, où les coûts de chaque contexte de valeurs peuvent être différents, on définit pour chacun de ces contextes de valeurs une mesure locale évaluée d'occupation de valeurs.

20. Procédé selon la revendication 18, **caractérisé en ce que**, lors de la résolution du problème, on calcule au moins une fois à partir d'une situation de départ prédéterminée les coûts de réglage d'une situation cible prédéterminée, où une situation est un contexte de valeurs dans lequel tous les paramètres d'entrée libres sont occupés par des valeurs et, pour chaque paramètre d'entrée libre p du système, on calcule les coûts de réglage pour la valeur que le paramètre p a dans la situation cible Z, en fonction de la situation de départ A par l'utilisation du procédé selon la revendication 19, et on détermine, à partir du vecteur de coût qui en résulte, sur tous les paramètres d'entrée libres par une norme vectorielle quelconque les coûts de réglage de la situation cible de Z.

21. Procédé selon la revendication 20, **caractérisé en ce que** la norme vectorielle est le maximum, le produit ou l'addition.

22. Procédé selon la revendication 6 ou 20, **caractérisé en ce que**, lors de la résolution du problème, on trouve au moins une fois, à partir d'une situation de départ prédéterminée et d'un ensemble prédéterminé de situations cibles, la situation cible d'où ressort le paramètre qui a les coûts de mesurabilité ou d'accessibilité les plus faibles dans la situation cible si le système technique se trouve dans la situation de départ, où est prédéterminé un système heuristique de compensation de coûts bidimensionnel qui est une fonction qui représente deux chiffres par un nouveau chiffre, et pour chaque situation cible prédéterminée Z et chaque paramètre p,
• les coûts de réglage sont calculés à partir de la situation de départ selon un procédé de la revendication 20,
• ensuite, les coûts de mesurabilité ou d'accessibilité du paramètre p sont calculés en fonction de la situation cible Z selon un procédé de la revendication 6,
• puis on détermine les coûts totaux de mesurabilité ou d'accessibilité du paramètre p dans la situation Z, si le système technique se trouve dans la situation de départ A,
les coûts totaux étant déterminés par le système heuristique de compensation de coûts bidimensionnel,
et, enfin, on détermine la situation cible Z d'où ressort le paramètre qui a les coûts totaux les plus faibles parmi ceux qui viennent d'être calculés.

23. Procédé selon la revendication 22, **caractérisé en ce qu'**on détermine l'ensemble de situations cibles en utilisant un procédé de génération de candidats prédéterminé, qui repose sur une relation d'ordre entre les situations afin de calculer les situations descendantes, et on utilise comme ensemble de situations cibles la situation de départ et les situations descendantes calculées par le procédé de génération de candidats.

24. Procédé selon l'une quelconque des revendications 8 ou 20, **caractérisé en ce que**, lors de la résolution du problème, on trouve au moins une fois à partir d'une situation de départ prédéterminée et d'un ensemble prédéterminé de situations cibles la situation cible dont ressort le paramètre qui a le meilleur rapport coût/performances dans la situation cible si le système technique se trouve dans la situation de départ, où l'on prédétermine un système heuristique de compensation de coût bidimensionnel, qui est une fonction qui représente deux chiffres par un nouveau chiffre, et un système heuristique de coût/performances qui est une fonction qui représente deux chiffres par un chiffre, et où, pour chaque situation cible prédéterminée Z,
- les coûts de réglage de la situation cible Z sont calculés à partir de la situation de départ par le procédé selon la revendication 20,
- ensuite, pour chaque paramètre p,
- le rapport coût/performances du paramètre p est calculé en fonction de la situation cible Z si le système technique se trouve dans la situation de départ, respectivement le système heuristique coût/performances prédéterminé selon le procédé de la revendication 8,
où la situation cible Z est le contexte de valeurs prédéterminé,
- l'évaluation totale du paramètre p est déterminée avec le système heuristique de compensation de coût prédéterminé,
où l'on utilise comme coûts :
- les coûts de réglage de la situation cible Z à partir de la situation de départ, et
- le rapport coût/performances du paramètre p,
et, enfin, on détermine la situation cible d'où ressort le paramètre qui a la valeur optimale parmi les évaluations totales que l'on vient de calculer.

25. Procédé selon la revendication 24, **caractérisé en ce qu'**on détermine l'ensemble de situations cibles en utilisant un procédé de génération de candidats prédéterminé qui repose sur une relation d'ordre entre les situations pour calculer des situations descendantes, et on utilise comme ensemble de situations cibles la situation de départ et les situations descendantes calculées par le procédé de génération de candidats.

26. Procédé selon l'une quelconque des revendications 4 à 14 ou 16 à 25 et selon la revendication 3, **caractérisé en ce que** l'on utilise un procédé selon l'une quelconque des revendications 4 à 14 ou 16 à 25 et on propage de la sorte simultanément plusieurs contextes de valeurs selon le procédé de la revendication 3.

27. Procédé selon la revendication 2 et selon l'une quelconque des revendications 4 à 14 ou 16 à 25, **caractérisé en ce que** l'on utilise tout d'abord un procédé selon la revendication 2 pour convertir une mesure globale en mesure locale et, ensuite, selon l'une quelconque des revendications 4 à 14 ou 16 à 25.
